# EUROPEAN PATENT SPECIFICATION

(11) **EP 0 376 556 B1**
(45) Date of publication and mention of the grant of the patent: **12.06.1996**
(21) Application number: 89313103.7
(22) Date of filing: 14.12.1989
(51) Int. Cl.: H04Q 3/00

(54) **Real-time network routing**
Echtzeitnetzwerkleitweglenkung
Réseau à acheminement en temps réel

(30) Priority: 29.12.1988 US 291845
(43) Date of publication of application: 04.07.1990
(73) Proprietor: AT&T Corp., New York, NY 10013-2412 (US)
(72) Inventor: Ash, Gerald Richard, West Long Branch New Jersey 07764 (US); Chen, Jin-Shi, Holmdel New Jersey 07733 (US); Frey, Alan Eugene, Naperville Illinois 60540 (US)
(74) Representative: Buckley, Christopher Simon Thirsk

(56) References cited:
- WO-A-87/03763
- CH-A- 658 156
- US-A- 4 284 852
- BRITISH TELECOMMUNICATIONS ENGINEERING. vol. 7, no. 1, April 1988, LONDON GB pages 7 - 18; B. LAW ET AL.: 'CCITT Signalling System No.7: Message Transfer'
- ELECTRONICS AND COMMUNICATIONS IN JAPAN. vol. 68, no. 9, September 1985, NEW YORK US pages 88 - 97; A.TODA: 'Traffic Control Strategies for a Both-Way Circuit-Group'
- ICC 1985, SESSION 25, PAPER 1 vol. 2, 23 June 1985, CHICAGO US pages 1 - 4; A.CHENG: 'Virtual Fiber Networking'
- INTERNATIONAL SWITCHING SYMPOSIUM 1979, SESSION 30B, PAPER 4 7 May 1979, PARIS FR pages 619 - 626; M.AKIYAMA: 'Speech-Path Selection and Inter-Processor Signalling in a Load-Shared Distributed Switching System'
- INTERNATIONAL TELETRAFFIC CONGRESS 1985 vol. 5, 1985, AMSTERDAM NL pages 730 - 736; R. HUBERMAN: 'Multihour Dimensioning for a Dynamically Routed Network'

## Description

This invention relates to methods of and apparatus for call routing.

Complex telecommunications networks, such as AT&T's public switched toll network, usually require that a substantial portion of the calls across the network be routed between a source switching system and a destination switching system via an intermediate switching system. One arrangement for routing calls in a large network is the dynamic non-hierarchical routing (DNHR) arrangement described in Ash et al.: U.S. Patent 4,345,116. In this arrangement, each switching system is equipped to translate from a received directory number to find a corresponding destination switch. Each switch is further equipped to translate from the identity of the destination switching system to an ordered set of up to 14 direct (i.e., without using an intermediate switching system), or alternate routes for reaching this switching system. Each switching system is further equipped with 16 sets of alternate routing tables in order to allow different routing choices to be used for handling the different characteristics of the call traffic at different hours of the day or days of the week. The routing tables are typically updated approximately once per week from information collected at a central operation support system, an integrated routing administration system. In addition, each switching system transmits circuit occupancy, and out of service data, and call loads to a centralized network management system every five minutes or even more frequently, to allow a centralized network management system to respond to special conditions such as temporary overloads of facilities or equipment outages.

DNHR, while it represented a major advance over earlier hierarchical arrangements, does present a number of problems. First, while the capacity of a given network using DNHR has been substantially increased over the capacity of that same network using earlier hierarchical routing arrangements, the performance of DNHR is still far from optimum. Second, DNHR requires that if an alternate route is attempted and the intermediate switching office has no available trunks to the destination switching system, that intermediate switching system must return a message to the source system, and the source system then tries another route. If many different alternate routes are attempted for each call during heavy load, this message traffic is heavy causing a substantial increase in call processing load to process these messages and appreciable delay in setting up the connections. Third, engineering and administration costs for maintaining a DNHR network in a close to optimum routing arrangement are high, requiring large numbers of traffic measurements in each switching system, substantial data processing in the integrated routing administration system, and careful monitoring of the results by traffic administration. Fourth, to respond to sudden changes, such as the outage of a switching system, the failure of a major transmission facility, or the presence of some natural disaster in one region, it is necessary to have a knowledgeable staff available to quickly change the routing patterns in order to protect the overall performance of the network. Fifth, DNHR requires that each switching system maintain a large number of tables to describe the routing to be used in each of the 16 different load set periods. Sixth, in an integrated network carrying, for example, voice and data, it is very difficult in a DNHR routing pattern to arrange to have an overflow mechanism for flowing traffic from, for example, voice to data facilities without creating excessive risk of sharply increasing the blockage, of, for example, data calls.

WO-A-8 703 763 discloses arrangements for selecting a path between a first and a second switch in a telecommunications network. When the first switch receives a call, it sends a request message to the second switch. The second switch responds with data indicating the value of an "occupancy factor", indicating the relative undesirability of using a particular link for the call. A route is selected the sum of whose occupancy factors is minimum.

According to one aspect of this invention there is provided a method as claimed in claim 1.

According to another aspect of this invention there is provided apparatus as claimed in claim 29.

In an embodiment of the invention calls for which there is no available direct communication path or circuit between a source switching system and a destination switching system are routed via an intermediate switching system, advantageously selected by comparing availability data of circuits between the source switching system and each intermediate switching system with availability data for circuits between the destination switching system and each of the intermediate switching systems. A route using an intermediate switching system having circuits available to both the source switching system and the destination switching system is selected. Advantageously, such an arrangement provides for a routing capability distributed into each of the switches performing the routing and selects a route with a high degree of assurance that the route is available. Advantageously, such an arrangement immediately responds to outages of switching systems or transmission facilities by routing calls around these systems or facilities.

Availability data for circuits between switching systems may be graded so that routes using lightly loaded facilities are preferred in the selection over routes using more heavily loaded facilities. Advantageously, such an arrangement diverts more traffic into lightly loaded facilities, thus decreasing blockage in the more heavily used routes.

Advantageously, such preference is given dynamically for each call thus permitting the overall network to respond immediately to shifts of traffic. Advantageously, such an arrangement routes more traffic over lightly loaded trunk groups, thus reducing blockage by keeping that load away from the more heavily loaded trunk groups.

Availability data from the destination switching system may be returned via a common channel signaling network to the source switching system whenever a direct circuit is not available between these two systems. Advantageously, such an arrangement provides up to date availability data to the source switching system for route selection.

A selection among available routes within a graded group (e.g., lightly loaded facilities) may be made by starting the selection process from a random point within the group of routes, the group being arranged in circular fashion so that the last member precedes the first. In one implementation, the random point is one beyond the intermediate switch last used for a call to the destination switch. Advantageously, such an arrangement avoids bunching of traffic to certain facilities.

Each switch may reserve a variable number of circuits to each connected switch and return data concerning availability based on availability of only the unreserved circuits. Trunks are reserved as a function of the blockage of calls over the route of the trunks. Advantageously, such an arrangement optimizes the amount of traffic carried by direct circuits and reduces blockage between pairs of switches that are not meeting their blockage objectives.

The telecommunications network may comprise a voice network and a circuit switched data network. Advantageously, combined voice and data circuits are made available for voice service or data service under the control of each switching system to optimize overall network performance without jeopardizing availability of data service by reserving such circuits for one or the other type service under high blockage conditions. More generally, trunks usable for two or more services can be reserved for one type of service if the blockage for that type of service becomes excessive.

### Brief Description of the Drawing

FIGS. 1-10 illustrate the choice of routes under different traffic conditions;
FIGS. 11-20 and 22-26 are flow charts of a method for controlling route selection;
FIG. 21 illustrates routes supporting different types of transmission; and
FIG. 27 is a block diagram of a switching system and signaling network for routing calls.

### Detailed Description

### 1.1 HIGH LEVEL OVERVIEW OF REAL-TIME NETWORK ROUTING (RTNR)

The invention will be described by way of illustration with reference to RTNR. RTNR is an adaptive routing scheme. For each call entering a network, the originating or access switch (ASW) analyzes the called number of the call and determines the terminating or destination switch (DSW) in the network for this call. The ASW will try to set up this call on a direct route to the DSW first. To do this, the ASW simply checks if it has any available 1-way outgoing or 2-way communication paths or trunks to the DSW; if so, the ASW will set up the call on a direct trunk to the DSW. This particular mode, being part of the prior art, is not shown in any of the illustrative routing diagrams but is shown in the flow diagrams.

If a direct trunk to the DSW is not available, the ASW will determine a route by trying to find an available 2-link path through the network to the DSW. In fact, the ASW finds all of the available 2-link routes to the DSW, and chooses a route containing the most lightly loaded communication path groups or trunk groups.

Any available 2-link route between the ASW and the DSW goes through an intermediate switch (ISW) to which the ASW has one or more idle outgoing trunks, and from which the DSW has one or more idle incoming trunks. In order to determine all of the ISWs in the network which satisfy these criteria, the ASW first asks the DSW to send a list of the switches at the far end of all of its (the DSW's) trunk groups that have available incoming trunks. The DSW also indicates the load status of these trunk groups. The ASW then compares the above list received from the DSW with a list of the switches at the far end of all of the ASW's trunk groups that have available outgoing trunks. Any switch that appears in both lists can be used as an ISW to set up a 2-link connection for this call. A switch that has lightly loaded trunk groups from the ASW and to the DSW will be chosen as the ISW for this call in preference over a switch that has a heavily loaded trunk group either from the ASW or to the DSW.

In order to respond optimally to peak traffic loads, RTNR limits the use of heavily loaded trunk groups for 2-link connections. This limitation increases the amount of direct traffic (or 1-link connections) between the two switches connected by a heavily loaded trunk group. This ensures a high completion rate for calls between these two switches, and increases the throughput of the network. A heavily loaded trunk group is only used in a 2-link connection for a call between two switches which have been experiencing substantial blockage for recent call attempts between these two switches. For such calls, the use of heavily loaded trunk groups will help improve the completion rate for calls between these two switches.

In order to further enhance the performance of the network, heavily loaded trunk groups may be placed in a reserved state to further increase the amount of direct traffic on the group. The reserved state is only used when the blocking rate for calls between the two switches connected by the trunk group exceeds a grade of service objective. By controlling the use of heavily loaded and reserved trunk groups for 2-link connections, the completion rate for calls between switches that have not been meeting their grade of service objectives can be improved while possibly increasing the blocking rate for calls between pairs of switches that are within their grade of service objectives. As a result, blocking is spread across switch pairs as much as possible so that few, if any, switch pairs in the network fail to meet the grade of service objective for blocked call attempts between each pair of switches. These controls also increase the traffic throughput of the network by maximizing the number of calls carried on direct trunks, i.e., 1-link connections.

### 1.2 TRUNK GROUPS AND TRUNK GROUP LOAD STATES

From the perspective of any switch, for example, Switch A, there are three kinds of trunks between Switch A and some other switch, for example Switch B; there are 1-way outgoing trunks to B, 1-way incoming trunks from B, and 2-way trunks. Once again using Switch A's perspective, A's outgoing trunk group to B is defined to include all of the 1-way outgoing trunks to B, as well as all of the 2-way trunks between A and B. Switch A's incoming trunk group from B includes all of the 1-way incoming trunks from B, and also all of the 2-way trunks between A and B. Note that 2-way trunks are considered to be members of both the incoming and outgoing trunk groups.

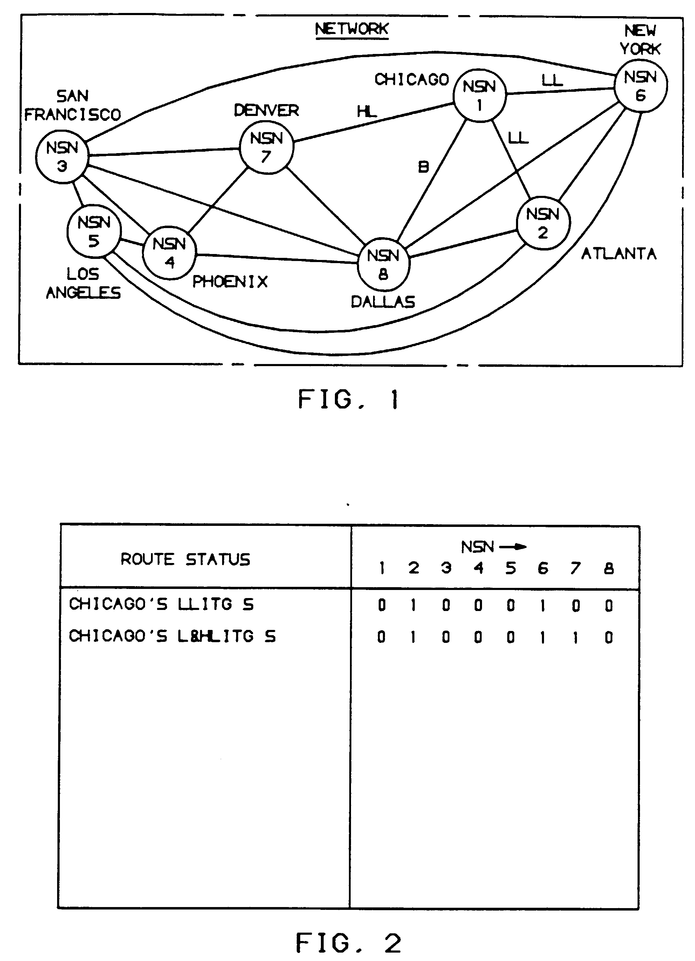

The load status for a trunk group is based on the number of available trunks in the group. A discrete number of load states are defined, and an available trunk threshold value is set for each load state. In the examples described with respect to FIGS. 1-10, four load states (lightly loaded, heavily loaded, reserved, and busy) are illustrated to keep the description concise. If the number of available trunks in a group exceeds the lightly loaded state threshold, e.g., more than 5% of the total number of trunks in the group are available, then the group is considered to be lightly loaded. If the number of available trunks in the group is less than the lightly loaded state threshold but greater than the heavily loaded state threshold, e.g., somewhere between one trunk and 5% of the total number of trunks in the group, then the group is considered to be heavily loaded. When none of the trunks in a group are available, the group is considered busy. Use of additional load states introduces additional checking steps, but does not otherwise affect the basic principle of operation. As discussed in section 1.12, better performance is obtained using six different load status values.

The reserved state is only used for a trunk group when the number of blocked calls between the two switches connected by the trunk group exceeds a grade of service objective. When this condition occurs, a reserved state threshold is set based on the level of blockage. The load state thresholds for both the heavily loaded and lightly loaded states are adjusted upward by the amount of the reserved state threshold.

The arrangement for placing a trunk group into the reserved state is as follows. Periodically, for example, once per minute, the switch multiplies the number of calls attempted to the switch at the other end of the trunk group in the period, by the blocking grade of service objective for these calls, (e.g. 1%), to determine the maximum number of call attempts which could be blocked and still meet the grade of service objective; this is hereafter referred to as the blocked call objective. If the number of calls blocked during the period is greater than the blocked call objective, then the grade of service objective has not been met over the previous period. When this occurs, the reserved state will be used for the trunk group during the next measurement period.

Two alternatives can be used to set the load state thresholds for a trunk group.

One alternative is to set these thresholds based on the total number of trunks in the group. The base heavily loaded and lightly loaded thresholds are set to a fixed percentage of trunks in the group. The reserved state threshold is set to different percentages of trunks in the group based on the blocking rate for calls between the two switches connected by the trunk group. At the end of each measurement period, the node-to-node blocking rate is checked to determine if a reserved state threshold should be set; if so, the heavily loaded and lightly loaded threshold values are adjusted upward from their base values by the amount of the reserved state threshold. These load state thresholds will be used for the trunk group throughout the next measurement period. Table I illustrates an exemplary set of reserved state thresholds based on trunk group size. Table II illustrates an exemplary set of heavily loaded and lightly loaded state thresholds based on trunk group size.

**TABLE I**

| N-N Block % | Rsvd Thr Based on Trunk Group Size |
|---|---|
| < 1 | 0 |
| 1-5 | (5% of Trunks in Group; Min 2, Max 10) |
| 5-15 | (10% of Trunks in Group; Min 4, Max 20) |
| 15-50 | (15% of Trunks in Group; Min 6, Max 30) |
| > 50 | (20% of Trunks in Group; Min 8, Max 40) |

**TABLE II**

| # Available Trks in Grp | Load State |
|---|---|
| 0 | Busy |
| > 0,$ <= $ Rsvd Thr | Reserved |
| > Rsvd Thr, $ <= $ Rsvd Thr + 5% Trks in Grp | Heavily Loaded |
| > Rsvd Thr + 5% Trks in Grp | Lightly Loaded |

The second alternative is to base the load state thresholds for a trunk group on the call load between the two switches connected by the trunk group being presented, or offered, to the network. For this alternative, an exponentially smoothed approximation of the offered call load between two switches is made at the end of each measurement period. The base heavily loaded and lightly loaded state thresholds used for the trunk group connecting these two switches are set to fixed percentages of the offered call load between these two switches; these thresholds will be used for the trunk group during the next measurement period. Dynamically adjusting load state thresholds upward as the offered call load rises increases the amount of direct routed traffic in the network. Adjusting these thresholds downward as the offered call load falls allows a trunk group which does not have much direct traffic to carry to be used for more 2-link connections. Both actions help increase the call throughput of the network.

At the end of each measurement period, the node-to-node blocking rate for calls between two switches is checked to determine if the grade of service objective for these calls was met. If the objective was not met, a reserved state threshold for the trunk group connecting the two switches is set to the difference between the offered call load between these switches and the current number of completed calls between these switches that are still connected, subject to an appropriate upper limit. The reserved state threshold will be adjusted continuously throughout the next measurement period to reflect the difference between offered call load and completed calls. Every time a new call between these two switches completes, either over the direct route or over a 2-link route, the reserved state threshold for the trunk group connecting these two switches is decremented. Likewise, whenever a call between these two switches disconnects, the reserved state threshold is incremented. An appropriate upper limit is used for these reserved state thresholds. In this case, the reserved state threshold for a trunk group is the number of additional calls that need to be completed between the two switches connected by the trunk group in order to reach the offered call load target with an appropriate upper limit as shown in Table III, below. This is the number of available trunks in the trunk group that will be reserved for direct traffic only, and therefore ensure that the offered call load target for these two switches can be reached. Once the number of completed calls between these two switches indeed reaches the offered call load target, the reservation of available trunks for direct traffic only is stopped. This reservation control is turned back on and back off throughout the measurement period as the number of completed calls between these two switches oscillates around the offered call load target.

Table III illustrates an exemplary set of reserved state thresholds based on offered call load and node-to-node blocking. Table IV illustrates an exemplary set of heavily loaded and lightly loaded state thresholds based on offered call load.

**TABLE III**

| N-N Block % | Rsvd Thr Based on Forecasted Load |
|---|---|
| < 1 | 0 |
| 1-5 | Min [Max (0, OCL-CCL), (5% OCL; Min 2, Max 10)] |
| 5-15 | Min [Max (0, OCL-CCL), (10% OCL; Min 4, Max 20)] |
| 15-50 | Min [Max (0, OCL-CCL), (15% OCL; Min 6, Max 30)] |
| >50 | Min [Max (0, OCL-CCL), (20% OCL; Min 8, Max 40)] |
| OCL - Offered Call Load | |
| CCL - Current Call Load | |

**TABLE IV**

| # Avail Trks in Grp | Load State |
|---|---|
| 0 | Busy |
| >0, $ <= $ Rsvd Thr | Reserved |
| >Rsvd Thr, $ <= $ Rsvd Thr + 5% OCL | Heavily Loaded |
| >Rsvd Thr + 5% OCL | Lightly Loaded |

### 1.3 CHOOSING THE MOST LIGHTLY LOADED ROUTES

Choosing the most lightly loaded 2-link routes to set up calls is an important aspect of RTNR because this dynamically and continuously distributes traffic across the trunk groups in the network to achieve high trunk utilization.

The load status for a 2-link route is based on the load conditions of the two trunk groups that form that route. The load states used for trunk groups are applied to routes also. The load state of a route is the higher load state found on either of the trunk groups that form the route. If both of the groups are lightly loaded, the route is lightly loaded. If one group is lightly loaded, but the other group is heavily loaded, then the route is heavily loaded; a route is also heavily loaded if both groups in the route are heavily loaded. If one group of the route is in the reserve state, then the route is in the reserve state. Lastly, if either group in the route is busy, the route is busy.

When choosing a 2-link route for a call, the ASW will use a lightly loaded route if one is available. If only heavily loaded routes are available, one of them can be used to set up the call depending on the blocking conditions in the network. Lastly, if only reserved routes are available, one of them can be used to set up the call. If no direct route is available, and all of the 2-link routes are busy, the call will be blocked due to a no circuit condition.

RTNR controls the use of heavily loaded and reserved routes in order to meet grade of service objectives between as many pairs of switches as possible, and to maximize the traffic throughput of the network. When a trunk group becomes heavily loaded, it should be used primarily for new calls between the two switches connected by the trunk group; limiting the number of new 2-link connections using this trunk group protects the completion rate for a call between the two switches connected by the trunk group. Specifically, the only new 2-link connections allowed on a heavily loaded route are for calls between a pair of switches which have not been meeting their grade of service objective. Allowing these calls to complete over heavily loaded 2-link routes will help in meeting the grade of service objective for these calls.

A trunk group is only placed in the reserved state when there is substantial blocking for calls between the two switches connected by the trunk group. In this case, it is important to protect direct traffic on the group by further limiting the number of new 2-link connections allowed on the group. A 2-link connection can only be set up on a reserved route for a call between a pair of switches which have not been meeting their grade of service objective, and which are not connected by a direct trunk group; if a pair of switches is connected by a direct trunk group, this trunk group can be placed in a reserved state thus avoiding the need to use 2-link reserved routes.

In order to find the most lightly loaded 2-link routes available to a DSW, the ASW does the following. The ASW first requests the DSW to send three lists of switches; a list of the Switches at the far end of the DSW's Lightly Loaded Incoming Trunk Groups (LLITGS list), a list of the Switches at the far end of the DSW's Heavily and Lightly Loaded Incoming Trunk Groups (H&LLITGS list), and a list of the Switches at the far end of the DSW's Reserved, Heavily loaded, and Lightly Loaded Incoming Trunk Groups (RH&LLITGS list).

Upon receiving these lists, the ASW first compares a list of the Switches at the far end of its (the ASW's) Lightly Loaded Outgoing Trunk Groups (LLOTGS list) with the DSW's LLITGS list. If there are any switches that appear in both of these lists, one of them will be used as the ISW for the call; the 2-link route from the ASW to the DSW through this ISW is a lightly loaded route. If no switch appears in both of these lists, then there are no lightly loaded 2-link routes between the ASW and the DSW. If a heavily loaded route can be used for this call, the ASW will compare a list of the Switches at the far end of its Heavily and Lightly Loaded Outgoing Trunk Groups (H&LLOTGS list) with the DSW's H&LLITGS list. If there are any switches that appear in both of these lists, one of them will be used as the ISW of a heavily loaded route for the call. Finally, if a reserved route can be used for this call, the ASW will compare a list of the Switches at the far end of its Reserved, Heavily loaded, and Lightly Loaded Outgoing Trunk Groups (RH&LLOTGS list) with the DSW's RH&LLITGS list to see if there are any switches in both of these lists which can be used as the ISW of a reserved route for the call.

### 1.4 TRAFFIC LOAD ON TRUNK GROUPS USING RTNR

FIGS. 1-10 show how various routing problems are solved in an exemplary 8 node network with the nodes located as follows: node 1, Chicago; node 2, Atlanta; node 3, San Francisco; node 4, Phoenix; node 5, Los Angeles; node 6, New York; node 7, Denver; node 8, Dallas. Trunk groups exist between the following pairs of nodes: 1,2; 1,6; 1,7; 1,8; 2,5; 2,6; 2,8; 3,4; 3,5; 3,6; 3,7; 3,8; 4,5; 4,7; 4,8; 5,6; 6,8; and 7,8. In this exemplary network, all the trunks are 2-way trunks. In each of the diagrams, the status of the significant trunk groups is marked as follows: LL signifies lightly loaded, HL signifies heavily loaded, R signifies reserved status, and B signifies blocked (all trunks busy). In each of the figures, there are a number of status words, each 8 bits long and each reflecting some type of availability between a designated node and all other nodes of the system. The availability words are identified by a series of initials having the following meaning: LL - lightly loaded; H&LL - heavily and lightly loaded; R,H&LL - reserved, heavily, and lightly loaded; ITG - incoming trunk group; OTG - outgoing trunk group; S - far end switch; ISW - intermediate switch; R - routing; AISW - accessible intermediate switch.

First consider an example of how trunks between the Atlanta and Chicago switches are used. Assume that the lightly loaded idle threshold is 5% for the Atlanta-Chicago trunk group, i.e., more than 5% of the trunks must be idle for the group to be marked as lightly loaded.

If there is a low call load between Chicago and Atlanta, this trunk group will be able to carry this traffic, and be used for calls between Chicago and other switches, as well as for calls between Atlanta and other switches. For example, if the switch in Dallas does not have any direct trunks to Chicago available, it could set up a call to Chicago over the 2-link route of Dallas to Atlanta to Chicago. See FIGS. 1 and 2.

Once 95% of the trunks in this group are being used for either direct or 2-link calls, the group is marked heavily loaded. New traffic between Atlanta and other switches, and between Chicago and other switches, is then distributed over other routes in the network that are still lightly loaded, rather than being set up over this trunk group. 5% of this trunk group is still available to be used as direct connections for new calls between Atlanta and Chicago.

As calls previously set up over trunks in this group disconnect, the trunks used for those calls are idled. If new calls between Atlanta and Chicago arrive at a slower rate than the old calls disconnect, the number of idle trunks in the group eventually will exceed the 5% threshold. When this happens, the group is marked lightly loaded, and will be used again for new 2-link calls between Chicago and other switches, or between Atlanta and other switches.

However, once the group reaches the heavily loaded state, if new calls between Atlanta and Chicago arrive as fast or faster than the old calls disconnect, the number of idle trunks in the group will remain below the 5% threshold. In this state, the group is, in effect, dedicated for calls between Atlanta and Chicago only. Once the call load between these two switches exceeds the capacity of this group, Atlanta will begin looking for 2-link routes to Chicago, and vice versa.

### 1.5 LISTS OF FAR END SWITCHES OF AVAILABLE TRUNK GROUPS

As described earlier, with respect to the example of FIGS. 1-10, a switch needs to keep lists of the switches at the far end of available trunk groups; there is a LLITGS list, a LLOTGS list, a H&LLITGS list, a H&LLOTGS list, a RH&LLITGS list, and a RH&LLOTGS list.

The switch identifiers used in these lists must be recognized by all of the other switches in the network. Therefore, each switch in the network is assigned a unique Network Switch Number (NSN). In the example depicted in FIG. 1, there are eight switches in a network, which have been assigned NSNs one through eight arbitrarily, corresponding to the node numbers previously discussed. The NSNs are used as the identity of the switches in the list of switches at the far end of available trunk groups, e.g., the LLITGS list. Once again referring to FIG. 1, the Chicago switch has two lightly loaded incoming trunk groups; one from New York and one from Atlanta. Chicago's LLITGS list contains the NSNs of these two switches, i.e., NSN 6 and NSN 2 respectively.

One very efficient implementation for these far end switch lists is bit map tables. Each bit map table would have a one bit entry for each NSN in the network; bit entry "i" in the table is set if the switch assigned NSN="i" is to appear in this list. Every time the load status of a trunk group changes, the switch sets or zeroes the appropriate bit for the far end switch of this trunk group in each of the LLITGS, LLOTGS, H&LLITGS, H&LLOTGS, RH&LLITGS, and RH&LLOTGS bit map tables accordingly.

Using these bit map tables also makes it easy for an ASW to compare one of its outgoing trunk group far end switch lists with a DSW's incoming trunk group far end switch list and find all of the switches that appear in both lists. For example, the ASW simply ANDs its LLOTGS bit map table with the LLITGS bit map table received from the DSW to produce a Lightly Loaded Route Intermediate SWitch (LLRISW) bit map table list. If bit entry "i" in the LLRISW bit map table is set, the switch assigned NSN="i" can be used as an ISW for a lightly loaded 2-link connection between the ASW and the DSW.

A bit map table is also a very compact way to store a far end switch list. For example, the list for each status level for a network with 256 switches only requires 32 bytes of data. This is a very important consideration since this list needs to be sent frequently in a common channel signaling message.

### 1.6 SPECIFYING A LIST OF ALLOWED ISWs FOR A DSW

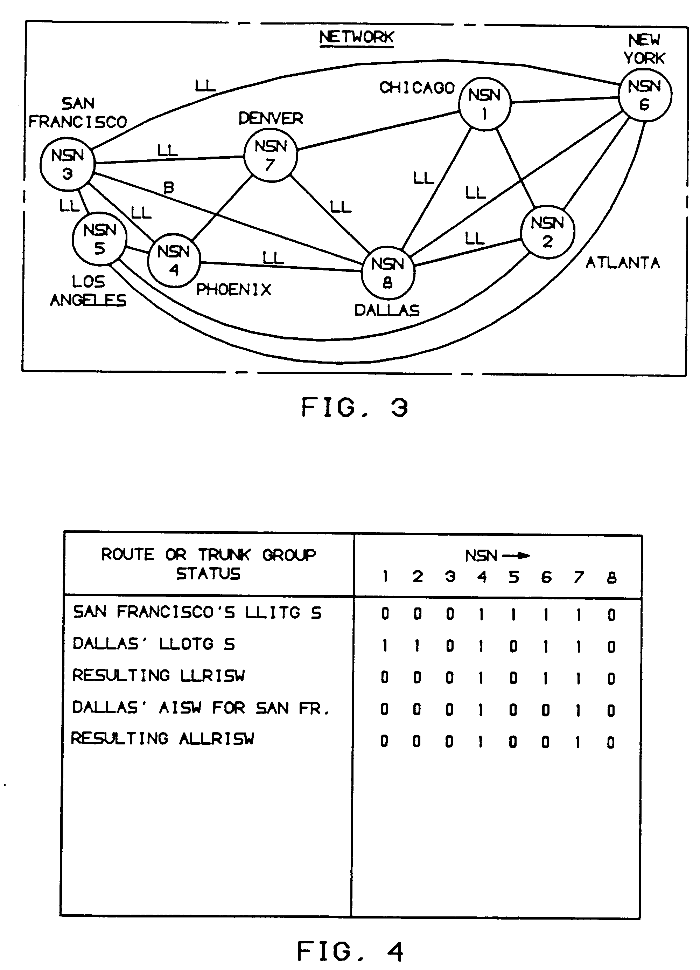

RTNR finds all of the available 2-link routes through the network between the ASW and the DSW for a call. Some of these routes can be many miles long. If the two trunk groups that form such a long route are not equipped with echo cancelers, the route may not provide good transmission quality for voice calls. For instance, referring to FIG. 3, there are three available 2-link routes from Dallas to San Francisco; there are two relatively short routes via Phoenix and Denver respectively, and one very long route through New York. Even though the route through New York is available, it should not be used since it would not have acceptable transmission quality.

Therefore, network engineers need to be able to define which of the possible routes between two switches are allowed to be used when available. The Dallas switch has a list of intermediate switches that it is allowed to use to set up calls to San Francisco. The Dallas switch also will have an Allowed Intermediate SWitch (AISW) list specified for every other switch in the network.

Bit map tables can be used for AISW lists also. Using the previous example, the Dallas switch can AND the LLRISW bit map table for San Francisco with its AISW bit map table for San Francisco to produce an Allowed, Lightly Loaded Route Intermediate SWitch (ALLRISW) bit map table list that only contains Phoenix and Denver. See FIGS. 3 and 4 for an illustration of this example.

### 1.7 CHOOSING ONE ROUTE FROM A LIST OF ALLOWED AND AVAILABLE ROUTES

Given a list of allowed and available routes to the DSW, any one of these routes can be used to set up the call. If a route is chosen from the list by some fixed algorithm, e.g., the first route to appear in the list is always used, then the 2-link traffic between two switches will always go over one particular route until that route becomes heavily loaded or busy. Once that occurs, all of this traffic then will be sent over the next route in the list.

However, if routes are chosen at random from this list, the 2-link traffic between two switches will be spread continually over the allowed and available routes. This should help keep trunk group loads balanced across the network.

To choose an ISW from an ALLRISW list bit map table, the ASW picks a random starting point in the bit map table, and starts a circular search through the table until an entry that is set is found. That entry identifies the NSN of the ISW to use for this call. One satisfactory choice of a random point is one position beyond the most recently used ISW for the route being searched.

FIGS. 1 and 2 simply show Chicago's access pattern for lightly loaded groups (access to nodes 2 and 6, i.e., Atlanta and New York), and Chicago's lightly loaded and heavily loaded trunk group access pattern, i.e., nodes 2, 6, and 7 (to Atlanta, New York, and Denver). FIGS. 3 and 4 show the routing of a call from Dallas to San Francisco when the direct route between those two nodes (nodes 8 and 3) is busy. San Francisco has a lightly loaded incoming trunk group switch access pattern showing availability to nodes 4,5,6, and 7 (Phoenix, Los Angeles, New York, and Denver). Dallas's lightly loaded outgoing trunk group switch access pattern shows access to nodes 1,2,4,6, and 7 (Chicago, Atlanta, Phoenix, New York, and Denver). As a result, 2-link lightly loaded routes are available via nodes 4,6, and 7 (Phoenix, New York, and Denver). However, the intermediate switches that the Dallas node is allowed to use for routing calls to San Francisco only includes routes through nodes 4 and 7 since the transmission quality of a connection from Dallas to San Francisco via New York is likely to be unacceptable. As a result, the allowable routing ISW word has the bit positions for nodes 4 and 7 set to 1 so that the call from Dallas to San Francisco can be set up via either Phoenix or Denver.

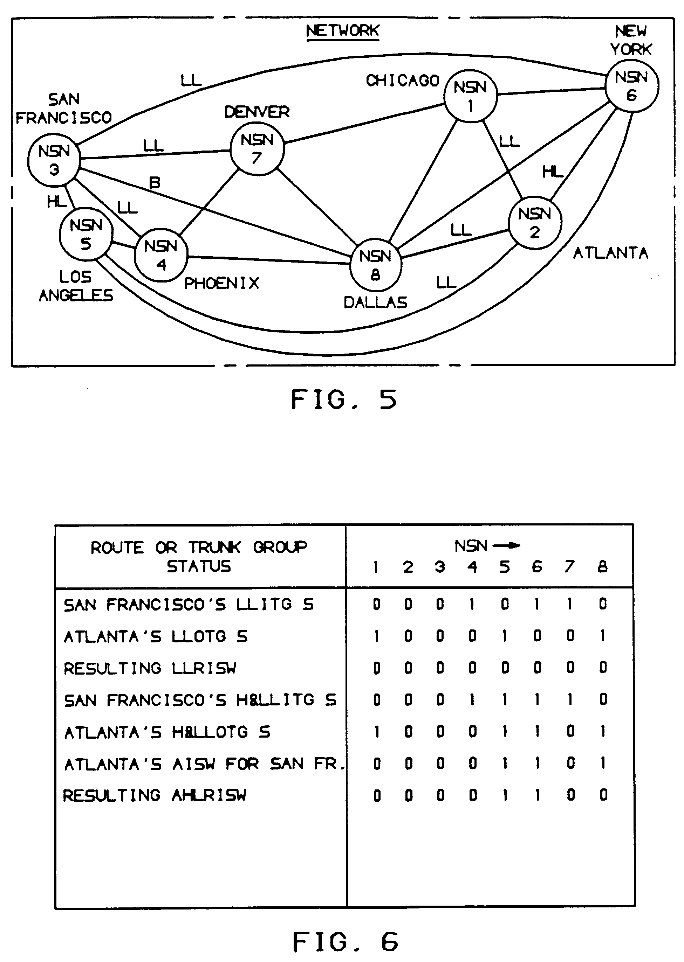

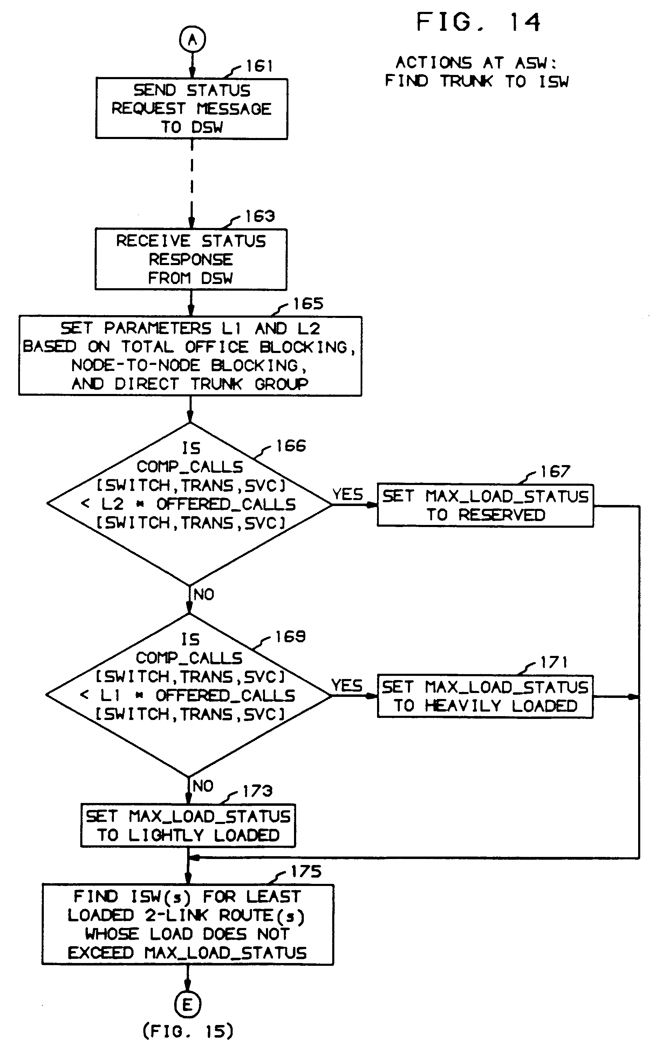

FIGS. 5 and 6 illustrate setting up a call from Atlanta to San Francisco under blockage states which permit the use of heavily loaded as well as lightly loaded trunks (see discussion with respect to FIG. 14. San Francisco's pattern of access via lightly loaded incoming trunk groups is to nodes 4, 6, and 7 (Phoenix, New York, and Denver). Atlanta's lightly loaded access to outgoing trunk groups is limited to nodes 1, 5, and 8 (Chicago, Los Angeles, and Dallas). Atlanta's allowed intermediate switches for a call to San Francisco is via nodes 5, 6, and 8 (Los Angeles, New York, and Dallas). As a result, there are no intermediate switches accessible from both Atlanta and San Francisco via lightly loaded trunk groups. The picture changes when lightly or heavily loaded trunk groups may be used. San Francisco's access to lightly and heavily loaded incoming trunk groups is to nodes 4, 5, 6, and 7 (Phoenix, Los Angeles, New York, and Denver). Atlanta's access via lightly and heavily loaded outgoing trunk groups is to nodes 1, 5, 6, and 8 (Chicago, Los Angeles, New York, and Dallas). When this is combined with Atlanta's allowable intermediate switch pattern for calls to San Francisco, nodes 5, 6, and 8 (Los Angeles, New York, and Dallas), it is found that a call from Atlanta to San Francisco can be set up via nodes 5 or 6, Los Angeles or New York. Note that in both of these routes, one of the trunk groups that must be used is heavily loaded.

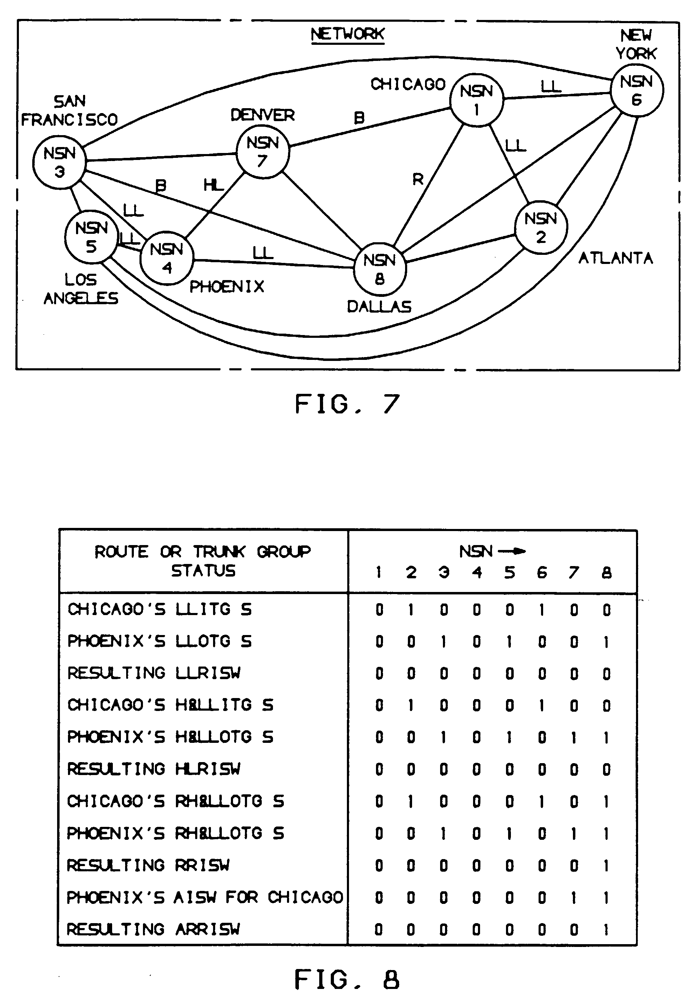

FIGS. 7 and 8 illustrates a call from Phoenix to Chicago in which no routes are available using either lightly loaded or heavily loaded trunk groups but one route is available using the trunk group between Dallas and Chicago which is in the reserved status. Calls using facilities in the reserve status may be set up only if they are over the direct route from the ASW to the DSW or if no direct facilities connect the ASW to the DSW. In this particular case, there are no direct trunk groups between Phoenix and Chicago (nodes 1 and 4) and it is assumed that the level of blockage is such that heavily loaded or reserved trunk groups may be used. In this particular case, the call from Phoenix to Chicago may be set up via Dallas using the Dallas to Chicago route which is in the reserved status.

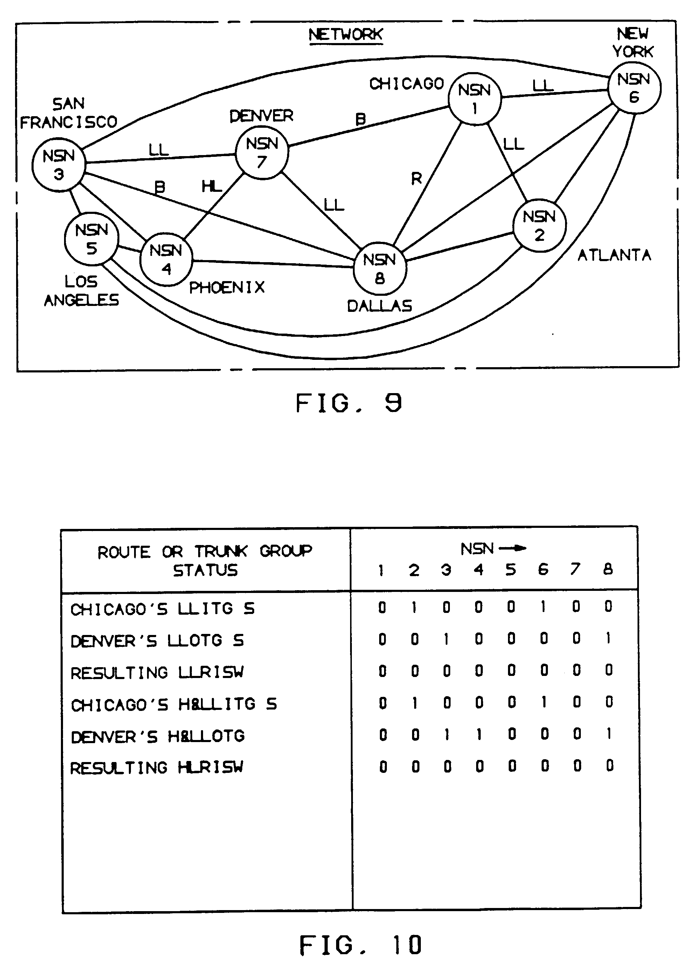

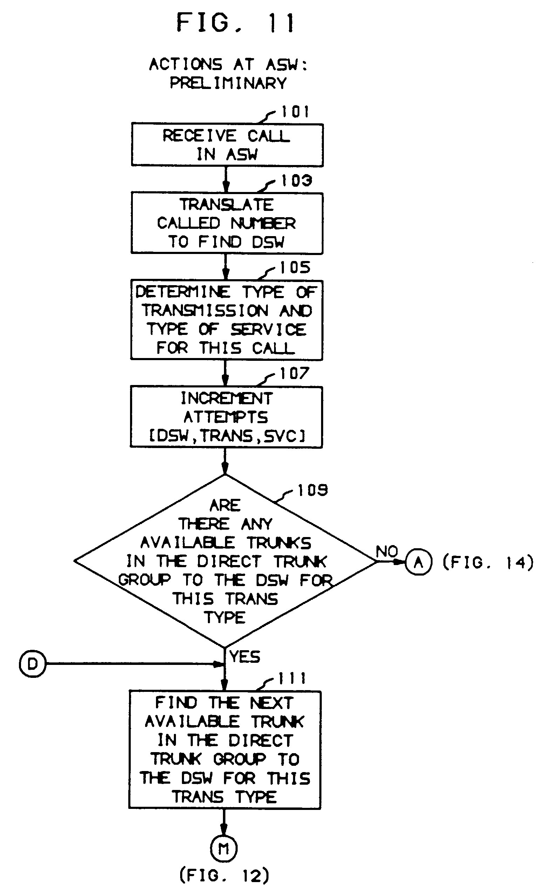

FIGS. 9 and 10 illustrate a call from Denver to Chicago, when the level of blockage over this route is sufficiently high so that heavily loaded trunk groups may be used. Note that Denver and Chicago are connected via a busy trunk group so that the option of using a reserved facility, for example, going via Dallas and using the reserved facility between Dallas and Chicago, is not permitted. In this particular case, Chicago can access nodes 2 and 6 (Atlanta and New York) via lightly loaded and heavily loaded incoming trunk groups and Denver can access nodes 3, 4, and 8 (San Francisco, Phoenix, and Dallas) via lightly and heavily loaded trunk groups; as a result, no intermediate switching point is accessible by either a lightly loaded or heavily loaded trunk group from both Denver and Chicago, and the call is therefore blocked.

A further check may be made to use a route having a combination of a lightly loaded and a heavily loaded trunk group in preference to a route having two heavily loaded trunk groups. This avoids the use of more heavily loaded trunk groups than is necessary.

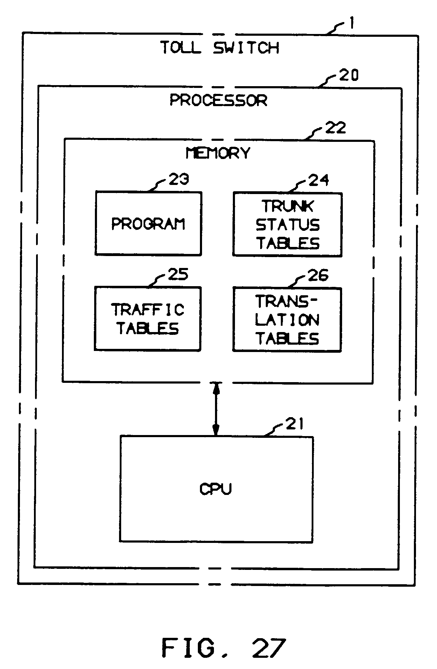

FIG. 27 is a block diagram of the pertinent portions of a toll switch used for practicing this invention and showing connections to a common channel signaling network for communicating data messages among the toll switches of the network. Toll switch 1 comprises a processor 20 that includes a central processing unit 21 and a memory 22. The memory includes a program 23 for controlling the operations specified in the flow charts of the diagram trunk status tables 24 indicating the availability of individual trunks and the level of availability of trunk groups traffic tables 25 for keeping track of the level of blockage for different kinds of services between different switches and translation table 26 for translating the number of call setup requests to the identification of a destination switch. Processor 20 is also connected via link 28 to a common channel signaling network 27 which is interconnected to other toll switches and which is used for transmitting data messages including the trunk group availability data messages between the toll switches of the network.

### 1.8 SETTING UP A CALL THROUGH AN INTERMEDIATE SWITCH

Once the ASW has selected an ISW, the ASW hunts for one of its available outgoing trunks to the ISW, and sets up the call on that trunk by sending an Initial Address Message (IAM) to the ISW.

Intermediate switches do their own analysis of the called number received in the IAM and make their own determination of the DSW for the call. The ISW hunts for an idle outgoing trunk to the DSW. Since the availability of this route was just checked, there should be idle trunks from the ISW to the DSW. There is the possibility, however, that these trunks have been used for calls set up between the time that the DSW sent its available ITGS lists and the time that the ISW is ready to hunt a trunk for the call; this should happen very infrequently.

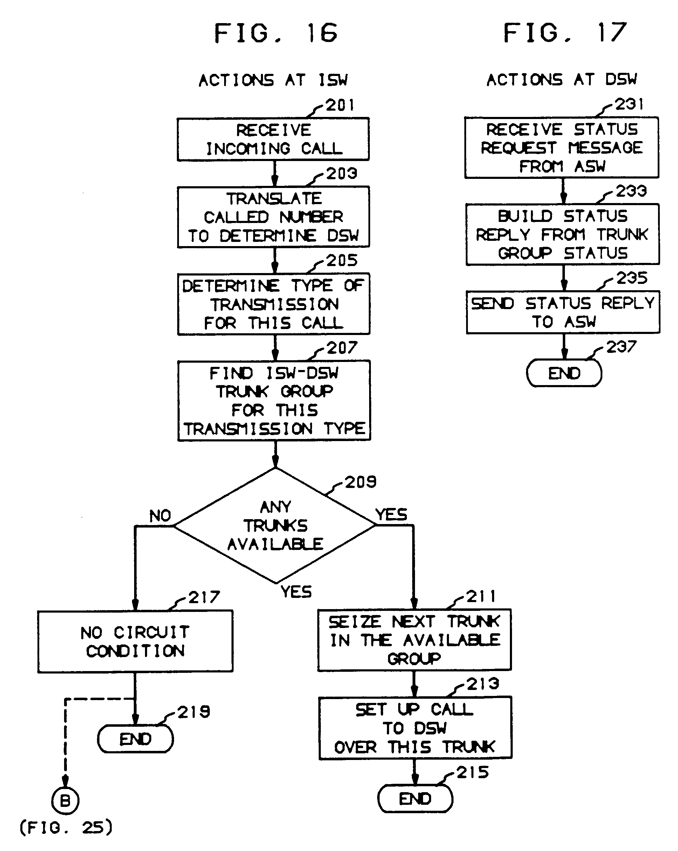

In the rare instances when the ISW no longer has any available trunks to the DSW, the ISW could either block the call, or it could send a CRANKBACK message to the ASW. Upon receipt of the CRANKBACK message, the ASW would select another ISW, if there is one, and attempt to set up the call through this newly selected ISW. The ASW can find a new ISW by continuing its circular search of the ALLRISW bit map table starting from the NSN of the switch which just cranked the call back. In the solid line portion of the flow diagram shown in FIG. 16 depicting actions performed at the ISW, the ISW blocks the call due to a no circuit condition when it can not find an available outgoing trunk to the DSW. As discussed further in section 1.14, CRANKBACK is another option and can be used as an alternative to simply considering the call to be blocked at this point.

### 1.9 RESILIENCE TO NETWORK FAILURES AND UNUSUAL TRAFFIC PATTERNS

Not only does RTNR check network status on a call-by-call basis, but it is also able to check and use any of the 2-link paths in the network. Because of this, RTNR provides a high degree of resiliency to network failures. RTNR will react automatically and immediately to troubles in the network, e.g., a switch outage or carrier failure, and route around the failure as much as possible. RTNR is also able to react automatically to unusual traffic patterns, e.g., those that occur on Mother's Day or following an earthquake in California.

### 1.10 USING RTNR FOR VOICE, DATA, AND BROADBAND CALLS

So far, this description has only described the use of RTNR for setting up voice calls in a network. RTNR can be applied to 56 kilobit/second (KBPS) data calls, 64 KBPS data calls, broadband data calls, and calls for whatever other transmission capabilities are supported by the switch. For each transmission capability supported by RTNR, a separate set of trunk groups, containing the circuits with this transmission capability, is specified in the switch. In addition, another set of lists of far end switches of these trunk groups which are available is maintained.

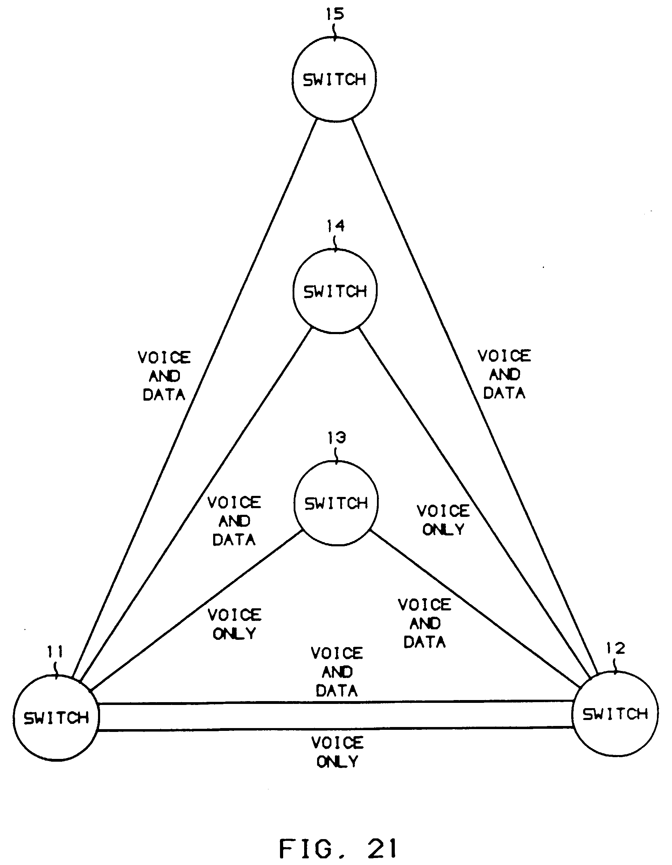

FIG. 21 illustrates connections between switches which make it desirable to maintain these separate counts of available trunks for supporting different transmission types. Switches 11 and 12 are directly connected by two groups of facilities, one supporting voice-only and one supporting voice and data. When all of these trunks are idle, the number of available trunks in the voice trunk group is the sum of the number of trunks in both groups of facilities; the number of available trunks in the data trunk group is the number of trunks in the voice and data facilities group. However, switches 11 and 13 are connected by voice-only trunks which cannot even be used for transmitting data. Whereas switches 13 and 12 are connected by a single combined voice and data group. When a voice call is routed via switch 13, the capacity of the trunk group between switches 12 and 13 to support data is reduced. The same thing is true for connections between switches 11 and 12, using switch 14 wherein the trunk group between switches 11 and 14 supports both voice and data. Whereas, the trunk group between switches 14 and 12 supports only voice. Finally, the connections between switches 11 and 12 via switch 15 are over combined voice and data trunks in both links of the connections, thus, setting up either a voice or a data call between switches 11 and 12 via switch 15 reduces the number of trunks available for the other type of transmission.

For example, in order for a switch to use RTNR for both voice and 56 KBPS data calls, a switch would have voice trunk groups and 56 KBPS data trunk groups to and from other switches in the network. The switch also would have a list of far end switches of lightly loaded incoming voice trunk groups, a list of far end switches of lightly loaded incoming 56 KBPS data trunk groups, etc.

When a switch wants to set up a 56 KBPS data call, it first checks for an idle circuit in the outgoing 56 KBPS data trunk group to the DSW; if one is found, the call will be set up on this direct data trunk to the DSW. If no direct 56 KBPS data trunk is available, the switch will ask the DSW to send a list of the far end switches of lightly loaded incoming 56 KBPS data trunk groups. With this information, the ASW will pick an ISW for this call, hunt an idle circuit in the outgoing 56 KBPS trunk group to the ISW, and set up the call on this trunk.

In many cases, voice and data trunk networks are completely separated. The trunks between two switches are split into dedicated trunk groups, i.e., some of the trunks are only used for voice calls, and the remaining trunks only carry 56 KBPS data calls. Separate networks under-utilize trunks. For example, a voice call will be blocked when all of the voice trunks are busy, even though one or more of the trunks dedicated for the 56 KBPS calls is available.

In an integrated network, suitably equipped trunks can be used for many types of calls, e.g., both voice and 56 KBPS data calls. When a trunk is used this way, it is considered a member of both the voice trunk group and the 56 KBPS data trunk group to the far end switch. When such a trunk is either seized or released, the count of the available trunks in both the voice and 56 KBPS data trunk groups is decremented or incremented respectively.

An integrated network is engineered to handle the combined forecasted call loads between two switches for many transmission types. An integrated network has the flexibility to handle a call overload between two switches for one transmission type if the traffic load between these two switches for the other transmission types are sufficiently under their engineered levels. An extreme call overload between two switches for one transmission type may cause calls between the two switches for all the transmission types to be blocked.

It is desirable to be sure that some minimum number of calls between two switches requiring a particular transmission type can be completed regardless of the call loads between the two switches for the other transmission types.

This can be accomplished by reserving available trunks for new attempts between the two switches connected by the trunks which require a particular transmission capability when the blocking objective for these types of calls is not being met, and the current number of completed calls between these two switches which required this transmission type is less than the pre-specified minimum call load desired to be provided for these types of calls. The number of available trunks reserved is the difference between the minimum call load level desired between the two switches for this transmission type and the current completed call load between these two switches with this transmission type. Once this number of available trunks have been reserved, any additional available trunks can be used to complete calls requiring a different transmission capability.

In addition to setting and meeting different blocking objectives for calls that use different transmission capabilities, it is also desirable to be able to set and meet different blocking objectives for different types of calls that all require the same transmission capability. For example, in order to maximize the earnings from voice calls, the blocking objective for high revenue international voice calls could be set lower than the blocking objective for domestic voice calls. RTNR can meet different blocking objectives for different types of calls by controlling the use of direct and 2-link routes based on the load status of trunk groups and the blocked call measurements for each type of call on a per call basis.

By applying trunk reservation and controlling the use of heavily loaded 2-link routes on the basis of service and/or transmission type, the performance of a multi-service network with integrated transmission capabilities can be optimized in terms of meeting the blocking objectives for all of the services and transmission types.

### 1.11 ACTIONS PERFORMED IN THE ASW, ISW AND DSW

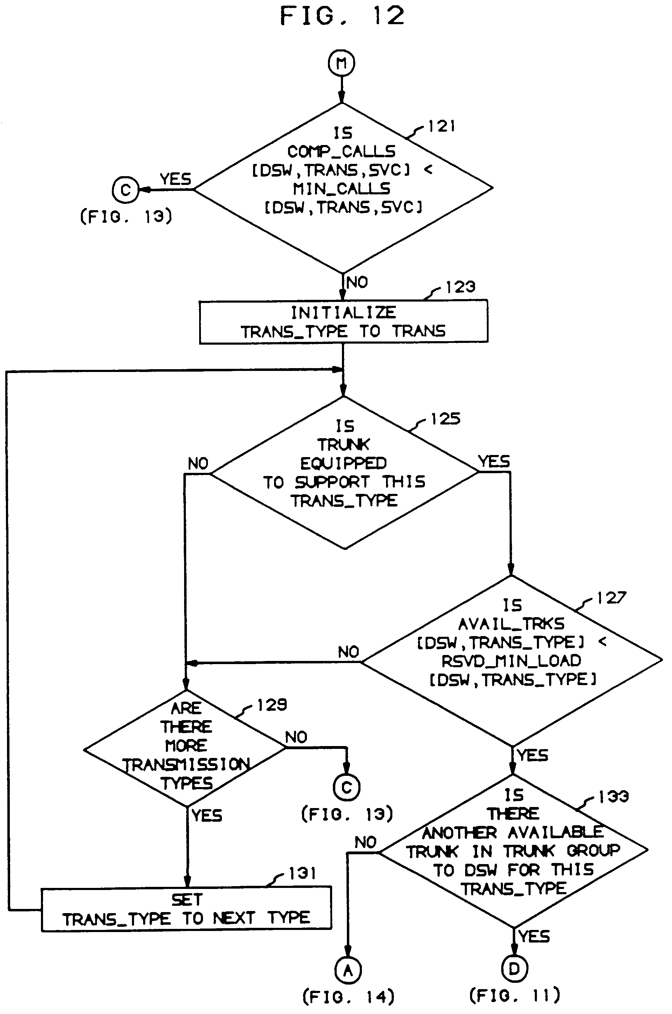

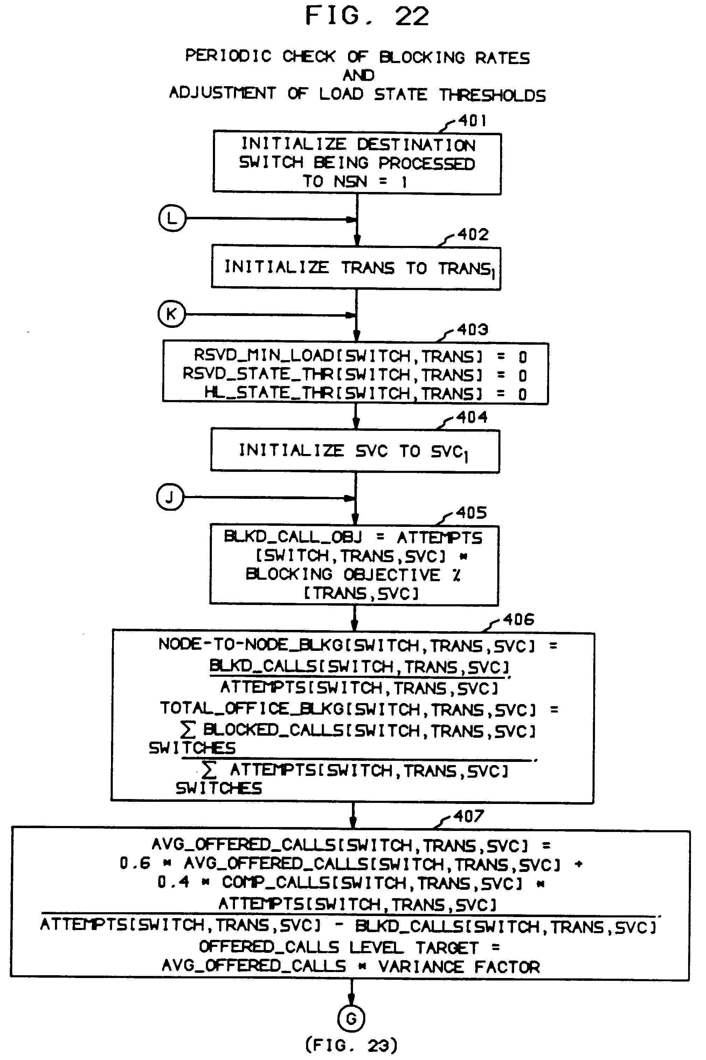

FIGS. 11-20 are flow diagrams of actions performed in the ASW, ISW, and DSW in routing calls. In these diagrams and FIGS. 22-26, DSW and switch are used interchangeably since the switch referred to therein is the DSW. FIGS. 11-15 are flow diagrams of actions performed in the ASW in response to receiving a call in order to route the call. A call is received in the ASW (action block 101). The ASW translates the incoming call directory number to find the DSW to which the call should be routed (action block 103). The transmission capability required for this call and the service type for the call is determined (action block 105). The counter for the number of call attempts to this DSW with this transmission type and this type of service is incremeted (action block 107).

Next, test 109 is made to check whether there are any available trunks in the trunk group to the DSW for this transmission type. If so, then the next available trunk in this trunk group is found (action block 111).

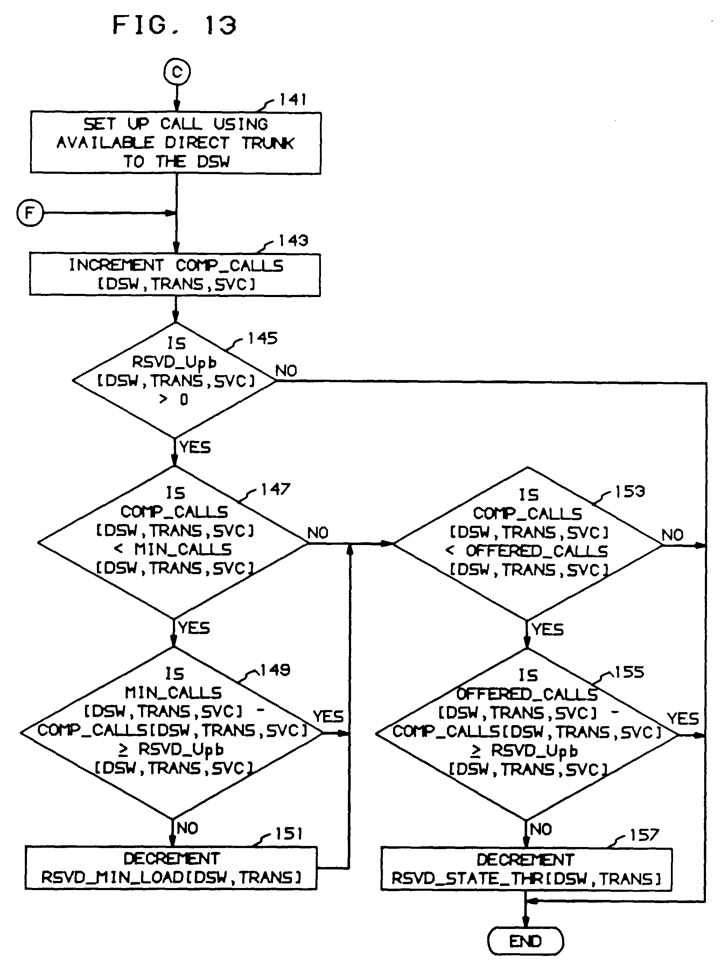

Test 121 (FIG. 12) determines whether the current number of calls completed to this DSW with this transmission and this service type is less than the minimum desired call load level to this DSW for this transmission and this service type. If so, the call is set up on this available direct trunk to the DSW (action block 141, FIG. 13), and the count of the number of completed calls to this DSW with this transmission and this service type is incremented (action block 143).

Now that another call to this DSW with this transmission and this service type has been completed, the system checks if any reservation controls for this type of call need to be adjusted. If the upper bound for the number of trunks to reserve for calls to this DSW with this transmission and this service type is zero (test 145), then no reservation controls are in effect, and all of the actions the ASW needs to perform to route this call have been completed.

If the result of test 145 is positive, then reservation controls are in effect for this type of call. Test 147 checks if the reservation control used to provide a minimum desired call load level for this type of call applies; if the just-incremented number of completed calls to this DSW with this transmission and this service type is still less than or equal to the minimum desired call load level for this type of call, then available trunks are being reserved for this type of call. If the difference between the minimum desired call load level for this type of call and the number of completions for this type of call is less than the upper bound for the number of trunks to reserve for this type of call (test 149), then the number of available trunks in this trunk group to be reserved for services not completing a minimum desired number of calls is decremented (action block 151). If the result of test 147 is negative or test 149 is positive, action block 151 is bypassed.

Next, test 153 checks if the reservation control used to keep available trunks from being used for 2-link connections until the completed call load for this type of call reaches the offered load level target for this type of call applies; if the just-incremented number of completed calls to this DSW with this transmission and this service type is still less than or equal to the offered call load level for this type of call, then available trunks are being reserved for this type of call. If the difference between the offered call load level for this type of call and the number of completions for this type of call is less than the upper bound for the number of trunks to reserve for this type of call (test 155), then the reserved state threshold for this trunk group is decremented (action block 157). If the result of test 153 is negative or test 155 is positive, then action block 157 is bypassed. All of the adjustments to the reservation controls have now been completed, and the ASW has now done all the actions needed to route this call.

If test 121 (FIG. 12) determines that the minimum desired number of calls to this DSW with this transmission and this service type have been completed, the system needs to check if this available trunk to the DSW is being reserved for another type of service that has not completed a minimum desired call load level to the DSW but is experiencing excessive blocking. This check must be done for each trunk group that this available trunk belongs to. The first transmission type supported to this DSW will be processed first (action block 123). If this available trunk is equipped to support this transmission type (test 125), then the system checks if the number of available trunks in the trunk group for this transmission type is less than the number of available trunks in this trunk group that are to be reserved for services unable to complete a minimum desired number of calls (test 127). If the result of test 127 is negative, test 129 determines if there are more transmission types supported to this DSW. If there are, the transmission type is set to the next type (action block 129), and the system proceeds to check if this available trunk is being reserved for a service defined for this transmission type (test 125). If there are no more transmission types supported to this DSW (test 129), then this available trunk can be used to complete this call (action block 141, FIG. 13).

If the result of test 127 is positive, then this available trunk to the DSW needs to be reserved for some other service, and therefore cannot be used to complete this call. Test 133 is used to check if there is another available trunk in the direct trunk group. If so, then the sequence of actions starting with action block 111 (FIG. 11) is repeated. If not, or if the result of test 109 (FIG. 11), previously described for checking whether there were any available trunks in the direct trunk group, is negative, then the actions associated with trying to find an appropriate 2-link route to the DSW, described in FIG. 14, are performed.

The first step of checking to find an available 2-link route is to send a status request message to the DSW (action block 161). In response to the reception of the status request message, the DSW performs the actions described infra with respect to FIG. 17. The DSW transmits a status response message which is received at the ASW (action block 163). As discussed hereinafter in section 1.12, optimum performance is obtained if several graded lightly loaded status values exist for each trunk group. The ASW searches the ISW(s) for the 2-link route having the lowest load status for the more heavily loaded link which lowest load status does not exceed the highest allowable load status. Among the 2-link routes with the lowest combined load status, the selected route is one that has the lowest total load status sum when the load status of the two individual links is added.

First the ASW checks the total office blocking, the node-to-node blocking, and whether there is a direct trunk group to determine two parameters, L1 and L2, action block 165, with an illustrative set of parameters is shown in Table V. Computation of node-to-node blocking and total office blocking is described below in reference to FIG. 22.

**TABLE V**

| MAX-LOAD-STATUS THRESHOLDS | | | | |
|---|---|---|---|---|
| Direct Trunks | Total Office Blocking (%) | Node-to-Node Blocking (%) | Thresholds | |
| | | | L1 | L2 |
| Yes | [0,3] | [0,1] | 0 | 0 |
| | | (1,50] | 1.0 | 0 |
| | | (50,100] | 1.0 | 0.5 |
| Yes | (3,10] | [0,15] | 0 | 0 |
| | | (15,50] | 0.7 | 0 |
| | | (50,100] | 0.5 | 0.5 |
| Yes | (10,100] | [0,15] | 0 | 0 |
| | | (15,50] | 0.7 | 0 |
| | | (50,100] | 0.5 | 0 |
| No | All | [0,1] | 1.0 | 0 |
| | | (1,100] | 1.0 | 1.0 |

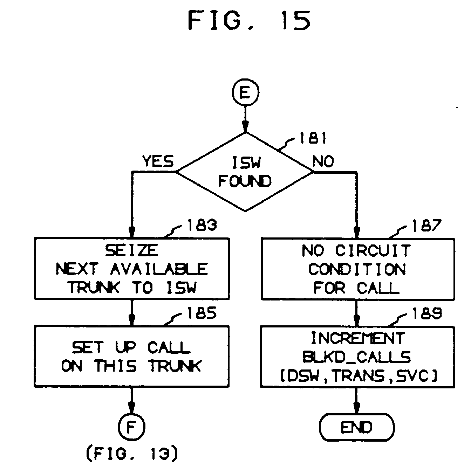

Test 166 is performed to check whether the current completed calls are less than the parameter multiplied by the offered call load level. If so, the maximum load status is set to reserved (action block 167). If not, test 169 is performed to check whether the current completed calls are less than the parameter L1 multiplied by the offered call load level. If so, then the maximum load status is set to heavily loaded (action block 171); if not, the max.load status is set to lightly loaded (action block 173). Otherwise, the maximum load status is set to lightly loaded (action block 173). Action block 175 then searches the ISWs for the least loaded 2-link routes whose load does not exceed the max load status. Among the 2-link routes with the lowest load status, the one route that has the lowest total load status when summed over the 2 links on the route is selected. Test 181 (FIG. 15) checks whether such an ISW was found. If so, then the next available trunk to that ISW is seized (action block 183) and the call is set up over this trunk (action block 185). Thereafter, traffic counts are updated in the actions of FIG. 13 starting with action block 143 previously described. If test 181 finds that no ISW was found, this corresponds to failure to find a circuit for this call (action block 187) and the counter of blocked calls to the particular DSW for the particular kind of transmission and service is incremented (action block 189). In test 181, if a plurality of ISWs are found all corresponding to the same lowest max load status, and which also have the same lowest total load status when summed over the two links of the route, then the first ISW beyond a random starting point and searching over all ISWs in a circular fashion is selected.

FIG. 16 describes the actions performed at the ISW. The incoming call is received (action block 201), the received directory number is translated to determine the DSW (action block 203), and the type of transmission for this call is determined (action block 205). Alternatively, the ASW could send the identification of the DSW as part of the IAM message. The identification of the DSW and the type of transmission provides the information needed to select the trunk group (action block 207) and test 209 is used to find if any trunks are available in that group. If so, then the next available trunk in that group is seized (action block 211) and the call to the DSW is set up over this trunk (action block 213). This ends the actions at the ISW (end, action block 215). If no trunks are available in that trunk group then this is treated as a no circuit condition (action block 217) and attempts to route the call further are ended (end, action block 219). The no circuit condition represents a state in which all trunks became unavailable between the time that the message from the DSW was sent to the ASW and the time that the call was forwarded from the ASW to the ISW. This type of situation should be quite rare and indicative of a very high load. As discussed in section 1.14, CRANKBACK is another option and can be used as an alternative to simply considering the call to be blocked at this point.

FIG. 17 shows the actions performed at the DSW in response to receipt of a status request message. The DSW receives the status request message from the ASW (action block 231) and builds a status reply from the status of the trunk groups connected to the DSW (action block 233). This status is then sent to the ASW (action block 235) which ends (action block 237) the actions required to respond to a status request message. In addition (not shown), the DSW receives incoming calls and routes them to the destination connected to the DSW using methods well known in the art for completing calls to a destination. This destination may be a local or a tandem switching system or perhaps even a customer directly connected to the DSW.

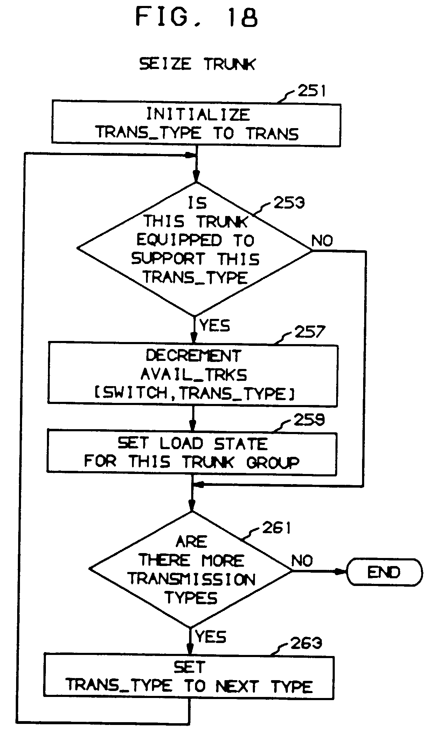

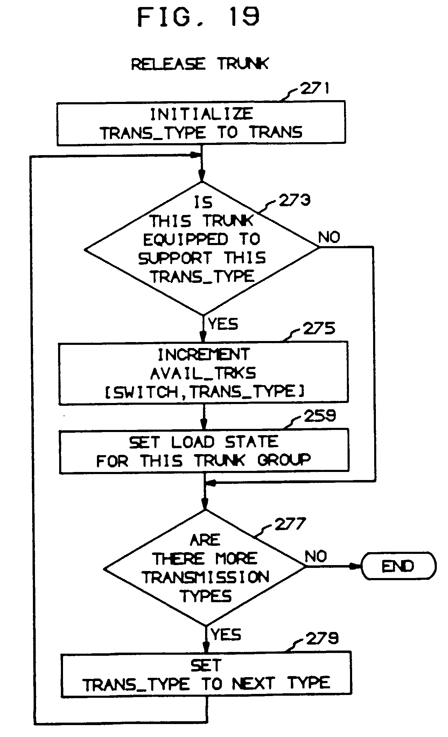

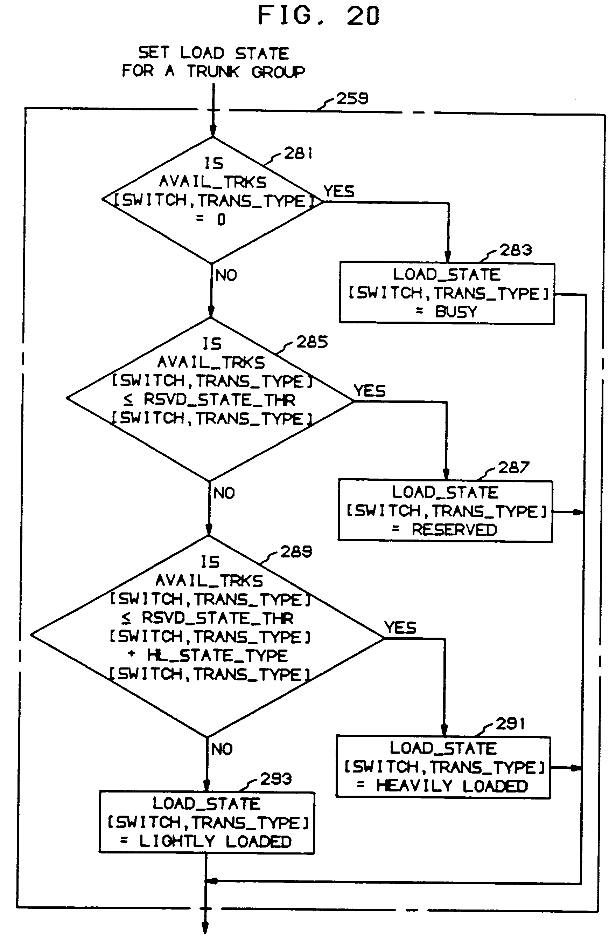

FIGS. 18-20 show additional actions for updating the trunk group load status as trunks are seized and released. FIG. 18 relates to trunk seizure. FIG. 19 is a comparable flow chart for actions performed when a trunk is released. In both cases it is necessary to update the number of available trunks to or from a particular switch that can handle a particular type of transmission. For example, if a trunk can support both voice and data, then when that trunk is seized or released, the number of available trunks for both voice service and data service must be updated. Similarly, the updated number of available trunks must be reflected in a revised load state for the trunk group, as described in FIG. 20 which is an expansion of action block 259 that is found in both FIGS. 18 and 19. When a trunk is seized or released, a counter or other indicator of different transmission types is initialized to transmission type 1 (action blocks 251 and 271 in FIGS. 18 and 19, respectively). A test is made (test 253 and 273 in FIGS. 18 and 19, respectively) of whether the seized or released trunk is equipped to support the transmission type being tested. If so, then the number of available trunks connected to the particular switch offering the particular transmission type is decremented (action block 257, FIG. 18) or incremented (action block 275, FIG. 19) depending on whether the trunk is seized or released, respectively. The load state for this trunk group is then updated as described hereinafter in FIG. 20 (action block 259). Following the updating of the load state or, in case the trunk being seized or released does not support this transmission type, test 261 (FIG. 18) or test 277 (FIG. 19) is performed to check if there are more transmission types. If not, then the updating of the number of available trunks and load state for the appropriate trunk groups has been completed. If so, the transmission type is advanced to the next type (action block 263, FIG. 18) or action block 279, FIG. 19) and the actions beginning with tests 253 (FIG. 18) or 273 (FIG. 19), respectively, are repeated for this transmission type.

FIG. 20 describes the actions required to update the load state for a trunk group. Test 281 checks whether the number of available trunks for the given connected switch and transmission type is now zero. If so, then the load state for that particular connected switch and transmission type is set to busy (action block 283). If not, then test 285 checks whether the available trunks for the particular connected switch and transmission type is equal to or less than the reserved state threshold for that connected switch and transmission type. If so, then the load state for that connected switch and transmission type is set to reserved (action block 287). If not, then test 289 is used to check whether the number of available trunks to the particular connected switch supporting the particular transmission type is equal to or less than the reserved state threshold associated with that group plus the heavily loaded state threshold associated with that group. If so, then action block 291 sets the load state to heavily loaded. If not, the load state is set to lightly loaded (action block 293). If there are a plurality of lightly loaded states, then action block 293 is expanded to include a group of tests to check the band of different lightly loaded states and to set the load state to the correct one of these bands.

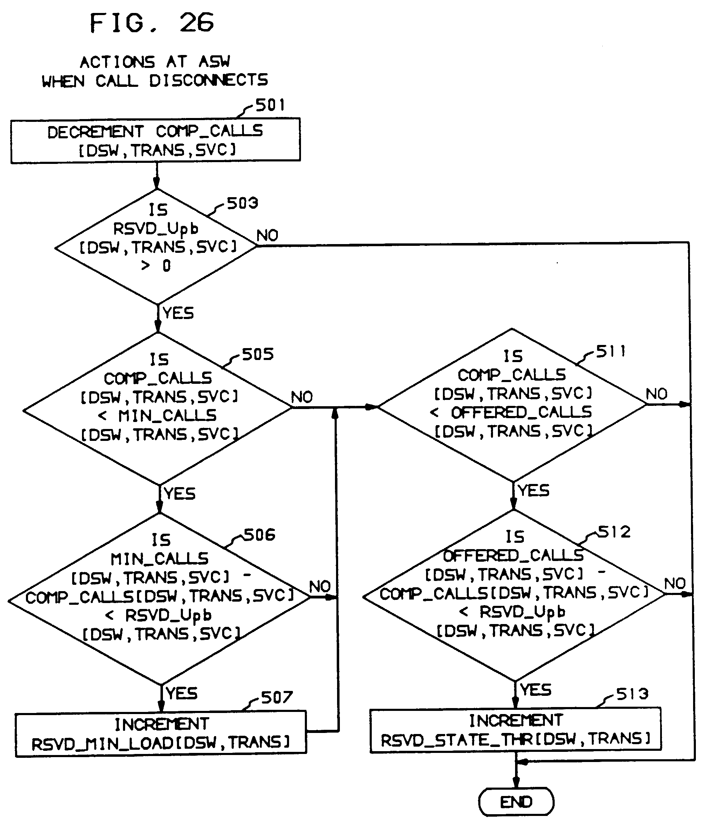

FIG. 26 describes the actions performed at the ASW when a call disconnects. First, the count of completed calls to the DSW for this type of transmission and service is decremented (action block 501). Test 503 then checks whether reservation controls are in effect to this DSW with this type of transmission and service. This check is based on whether the upper bound of the number of trunks reservable for this type of call is greater than zero. If not, no further action is required. If the result of test 503 is positive, then test 505 checks whether the just decremented number of completed calls of this type is less than the minimum desired call load level for this type of call. If so, test 506 checks whether the difference between this minimum desired call load level and the completed number of calls is less than the reserved upper bound limit for this type of call. If so, then the number of available trunks to be reserved in the trunk group to the DSW for this transmission type for services which have not reached their minimum desired call load level is incremented (action block 507). Action block 507 is bypassed if the result of either test 505 or 506 is negative. Next, (test 511) if the number of completed calls to this DSW with this transmission and service type is less than the offered call load level for this type of call, test 512 is performed. Test 512 checks whether the difference between the offered call load level and completed call load level for this type of call is less than the reserved upper bound limit for this type of call. If so, the reserved state threshold for the trunk group to the DSW for this transmission type is incremented (action block 513). Action block 513 is bypassed if the result of either test 511 or 512 is negative.

### 1.12 SIMULATION RESULTS

Simulations on the performance of the real-time network routing arrangement as contrasted with dynamic non-hierarchical routing show that the RTNR arrangement blocks less traffic under the same load. For example, in one simulation of a 103 node network loaded to produce 2% blocking using DNHR and a Network Management Operation System (NEMOS), the blockage for RTNR using 6 states was under .5%. These six states include three graded lightly loaded states, heavily loaded, reserved and busy. Effectively, using three grades of lightly loaded status tends to spread traffic and reduces the number of routes which go into the heavily loaded status. The blockage using RTNR was significantly lower in all cases of low blockage and was lower for traffic that produced high blockage. In particular, the response of RTNR to facility failure was much more rapid in restoring the system to a state wherein the blockage was substantially reduced from the original blockage and showed low blockage throughout the recovery interval. The simulations showed that the traffic handling capacity of the 6 state RTNR appeared to be substantially better than that of an RTNR using a smaller number of states.

### 1.13 OPTIMIZING TRUNK USAGE

FIGS. 22-24 show the actions that are performed on a periodic basis, e.g., once per minute, to monitor the performance of the integrated multi-service network, and accordingly adjust trunk group load state thresholds and reservation controls to optimize the throughput and performance of the network.

Calls are classified by three parameters, the destination switch for the call, the transmission capability required for the call, e.g., voice, 64 KBPS data, etc., and the service type for the call, e.g., international call, domestic call, etc. At the end of each measurement period, the blocking rate for each set of calls which go to the same destination switch, require the same transmission capability, and have the same service type, is checked. If the grade of service objective is not being met for a set of calls, trunk reservation controls are put into effect; these controls will increase the number of new attempts completed to this switch with this transmission and this service type, and thereby decrease the blocking rate for these new attempts.

Two types of reservation controls are used. The first control is used when the minimum desired level of completed calls to this switch with this transmission and this service type is not being provided. This control reserves available trunks in the direct trunk group to this switch for this transmission capability so that these trunks can be used to complete new call attempts for this particular service type. This control reserves the number of available direct trunks needed to meet the minimum desired call load level for this service; the number of trunks reserved is the difference between this minimum desired call load level and the current number of completed calls to this switch for this service. This procedure controls when available trunks in this trunk group can be used again to complete calls to this switch for services which already have a minimum desired number of completed calls.

The second control is used when the call load being offered to this switch with this transmission and service type is not being completed. This control reserves the number of available direct trunks needed to carry the call load being offered for this service; the number of trunks reserved is the difference between this offered call load level and the current number of completed calls to this switch for this service, with an appropriate upper limit, as specified for example in Table III. This procedure controls when available trunks in this trunk group can be used again in 2-link connections for calls to or from other switches. As such, the number of trunks reserved in a trunk group by this control is the value used for the reserved state threshold for this trunk group.

As shown in FIG. 22, upon being entered at the end of the period, the program is set up to start checking calls to the first switch in the network (action block 401). Each of the transmission capabilities supported to this switch must be checked, so the first transmission type is processed first (action block 402). The reserved and heavily loaded state thresholds for the trunk group to this switch for this transmission type are initialized to zero, as is the number of available trunks in this trunk group to be reserved for services not completing a minimum desired number of calls (action block 403). Next, each of the service types defined for this transmission type needs to be checked, so the first service type is processed first (action block 404).

The number of attempts to the selected switch with this transmission and this service type during the period is multiplied by the blocking objective percentage for these calls (action block 405). The product is the number of these attempts which could have been blocked during the period while still meeting the blocking objective.

The node-to-node blocking is determined as the ratio of the blocked calls for the destination switch with this transmission and service type divided by the attempts to the destination switch with this transmission and service type (action block 406). Similarly, the total office blocking is determined as the ratio of the sum of the blocked calls for all the destination switches with the transmission and service type divided by the sum of attempts to all the destination switches with this transmission and service type.

An approximation is then made of the call load to be offered to this switch with this transmission and this service type during the next period. The average offered call load to be offered during the next period is approximated to be the sum of 60% of the average offered call load estimate for the last period plus 40% of the current completed call load to this switch with this transmission and this service type multiplied by a blocking correction factor equal to attempts divided by attempts minus the blocked calls (action block 407). Average offered call load is then multiplied by a variance factor to obtain the offered call load level target. A typical value of the variance factor is 1.1.

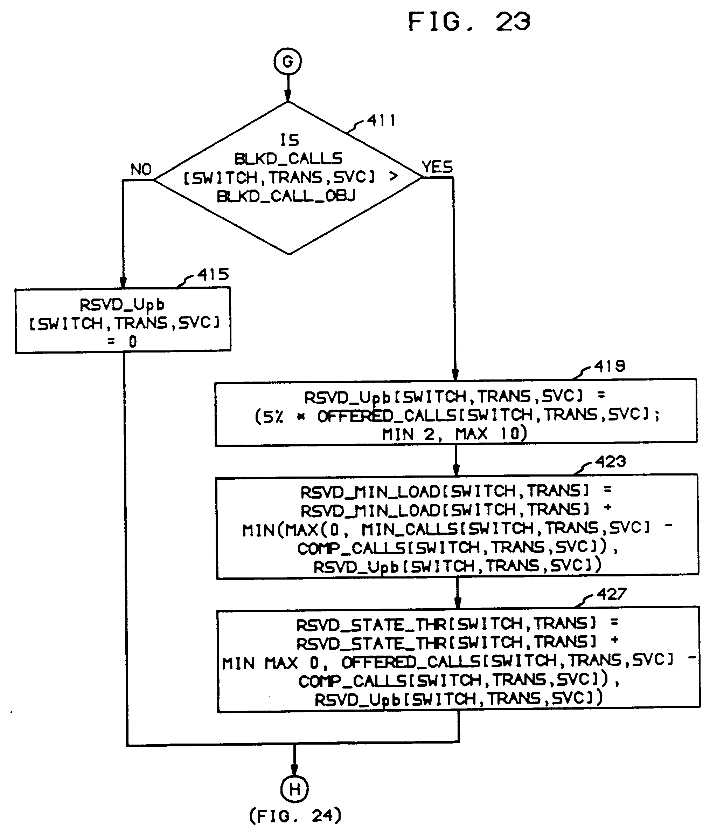

If the number of blocked call attempts to this switch with this transmission and this service type during this last period is less than or equal to the blocked call objective (test 411, FIG. 23), then no trunks need to be reserved for this service; the upper bound of the number of trunks to reserve for this service is set to zero (action block 415).

If the number of blocked call attempts to this switch with this transmission and this service type during this last period is greater than the blocked call objective (test 411), then trunks may need to be reserved for this service during the upcoming period. The number of trunks to be reserved should be limited to an upper bound, because once a substantial number of available trunks have been reserved, reserving additional trunks as they become available does not improve the performance of the reservation controls. An upper bound for the number of trunks reserved for this service is set, chosen from the smaller of 5% of the number of calls to be offered to this switch with this transmission and this service type limited to a range of two to ten (action block 419).

Next, if the minimum desired number of calls have not been completed to this switch for this service, then the number of available trunks in this trunk group to be reserved for services not completing a minimum desired number of calls is raised to account for this service (action block 423).

If the target number of completed calls being offered to this switch for this service have not been reached, then the reserved state threshold for this trunk group is raised to account for the number of available trunks in this trunk group to be reserved for direct calls to this switch for this service (action block 427).

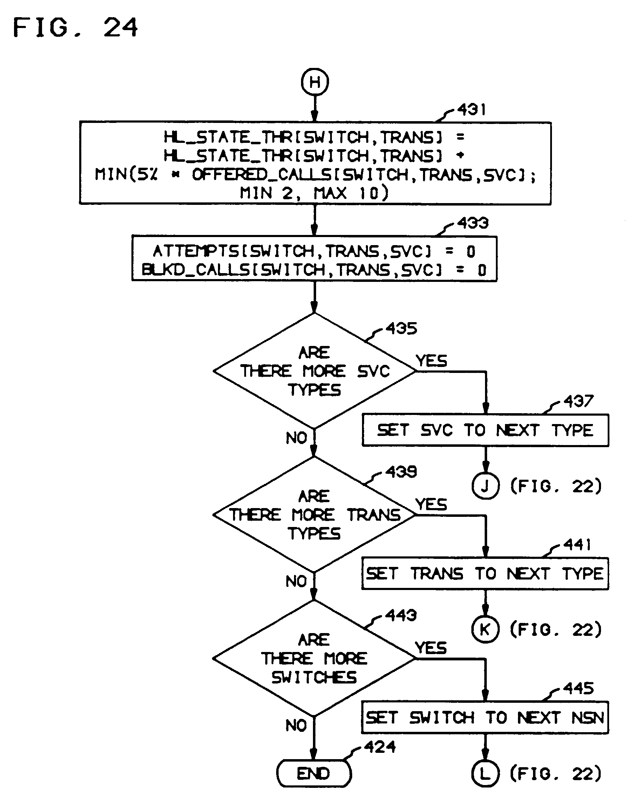

Now that reservation control actions have been completed, the heavily loaded state threshold to be used for this trunk group during the next period must be adjusted to reflect the offered call load for this service using this trunk group; the heavily loaded state threshold for this trunk group is raised by the smaller of 5% of the offered call load level for this service limited to a range of two to ten (action block 431, FIG. 24). The counters used to accumulate the number of call attempts and blocked calls to this switch with this transmission and this service type during the next period are set to zero (action block 433).

At this point, the actions for this service type have been completed. If there are more service types for this transmission type (test 435), then the service is set to the next type (action block 437) and the system proceeds to check the blocking rate for calls to the same switch using the same transmission type, but for this new service type (action block 405, FIG. 22).

If there are no more service types for this transmission type (action block 435), then the system checks if there are more transmission types supported by the network to this switch (action block 439). If there are more transmission types then the system sets the transmission to the next type (action block 441) and proceeds to check the blocking rate for calls to the same switch for all of the services for this new transmission type (action block 403, FIG. 22).

If there are no more transmission types to check for this switch, then the system checks if there are any more switches in the network (test 443). If there are, the system is set up to check the next switch (action block 445), and proceeds to check all of the transmission types and service types for this switch (action block 402, FIG. 22). If all the switches have been checked, the periodic check for blocking and adjustment of load state thresholds is completed.

### 1.14 ALTERNATIVE ARRANGEMENT FOR USING STATUS REQUEST AND STATUS RESPONSE MESSAGES

This section describes an alternative arrangement for using status request and status response messages. It addresses the problem in the arrangement described hereintofor, a delay for sending a status request message and waiting for the response is incurred every time no direct route is available. The basic arrangement for avoiding this delay is to use the most recently received status response from the destination switch and to make sure that this status response is updated by requesting a new status response. The new status response is then stored for use the next time that a status response from that DSW destination switch is needed. Since the status of the destination switch will sometimes not be up to date, it is necessary to provide for a CRANKBACK procedure since the route picked based on the not up-to-date destination switch status has a greater probability of being, in fact, blocked.

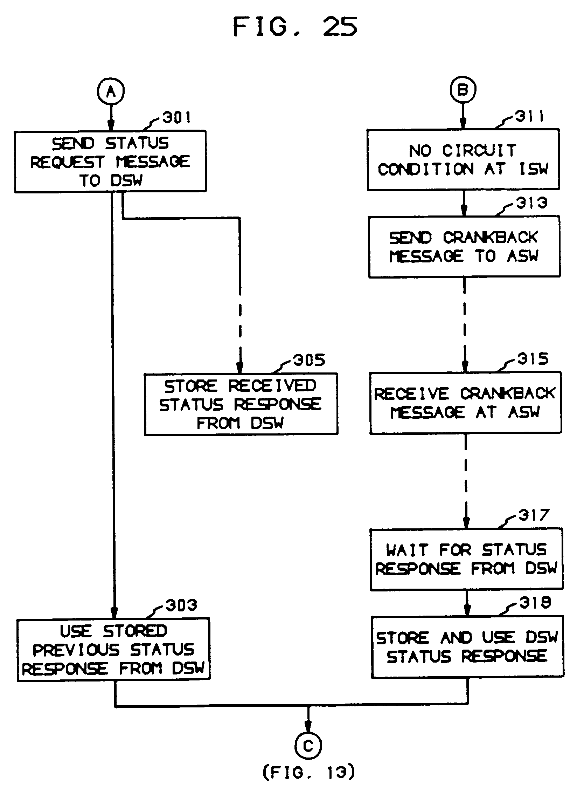

FIG. 25 is normally entered after test 109 (FIG. 11) has determined that there are no available direct trunks. A status request message is sent to the destination switch (action block 301) and when the response is received from the destination switch, this response is stored for future use (action block 305). In the meantime, the stored previous status response from that destination switch is used (action block 303) and the actions previously described with respect to FIG. 14 starting with test 165 are performed. These actions are used to find the appropriate intermediate switch to be used for routing this call.

In case no circuit is available at the intermediate switch, the no circuit condition of action block 217 of FIG. 16, which in the FIG. 16 flow chart led to an end of attempts to route this call. If the alternative approach of FIG. 25 is used, it is recognized that it is necessary to use up-to-date destination switch status information. In that case, action block 217 (FIG. 16) is followed by action block 311 (FIG. 25) which, for the sake of clarity, shows the no circuit condition at the intermediate switch. The intermediate switch sends a CRANKBACK message to the accessing switch (action block 313) which is received at the access switch in action block 315. The access switch waits for the status response from the destination switch (action block 317). This response may already have been received or may not yet have been received since the CRANKBACK message and the status response message are each received after one message round trip time, from the time that the access switch started looking for a route for the call in question. When the status response message from the DSW is received, then that status response is stored and is used for the subsequent search for a route starting with action block 165 of FIG. 14.

Another alternative is to transmit trunk group status information periodically from each switch. Such information can then be broadcast to all switches. The arrangement may be advantageous if good message broadcast facilities are available in the data network interconnecting the switches. With this arrangement, all switches periodically broadcast their trunk group status to all other switches, and as request messages are required. The most recently received trunk group status data replaces any older version and is directly used by the ASW. A CRANKBACK procedure, described supra, is advisable since the status information is not quite as current as it is if requested by the ASW in response to a call setup request.

### 1.15 NETWORK MANAGEMENT USING RTNR

There are three types of network management controls, code group controls, expansive routing controls, and restrictive routing controls.

Code group controls are used when the traffic load to a called number, or a set of numbers, is not being completed at or near the expected rate either because of unusual peaks or equipment failure. Code group controls are used to cut back attempts to the affected codes so that network resources are not excessively tied up for calls that have a poor probability of completing. These controls are independent of network routing strategies, and are unchanged by the use of RTNR. The ASW filters out at least some of the requests for connections to the affected code groups and does not even try to route these calls; unfiltered requests are routed in the normal fashion.

Expansive routing controls are used to increase the number of alternate routes from an ASW to a DSW by specifying additional alternate routes to those already contained in an engineered routing list. Network managers determine which potential routes in the network are carrying less than their engineered loads, and therefore can be used as alternate routes to handle some traffic peak. RTNR does not use engineered routing lists; in fact, RTNR automatically checks every possible route through the network for each call, and uses the lightest loaded route available. As such, expansive routing controls have been integrated into call routing.

Restrictive routing controls can be used, if necessary, to handle general traffic loads which are focused on a particular switch, i.e., the load is not focused on a code groups or a limited set of code groups. Restrictive routing controls also are intended to cut back the number of attempts directed to this switch, so that network resources are not excessively tied up completing calls to this switch, and thereby spread congestion to other switches in the network. RTNR gives network managers a readily usable framework for the specification of restrictive routing controls. Alternate routing can be restricted on the basis of the load status of the routes. For a moderate overload, only alternate routes that are very lightly loaded, or lightly loaded can be used. For a more extreme call overload, only very lightly loaded routes can be used. Again, these actions are more closely integrated with call routing. Network managers specify an override routing pattern to use for attempts to the switch under overload, and routing is automatically adjusted to this override pattern. However, it may not be necessary to provide restrictive routing controls; field experience and further simulations are necessary to check more definitely to see whether restrictive routing controls will still be required in a particular network.

### 1.16 GENERAL

While in this embodiment, the ASW selects the route, it is also possible for the DSW to receive ASW trunk group status and to select the route based on that data and the DSW's own status data.

While this embodiment relates to circuit connections, the invention can also be applied to packetized data connections. When setting up a packet data channel, the same method for selecting a route can be used in order to load traffic onto the more lightly loaded trunk groups or data circuits.

It is to be understood that the above description is only of one preferred embodiment of the invention. Numerous other arrangements may be devised by one skilled in the art.

## Claims

1. A method of determining, in a telecommunication network comprising a plurality of switching systems, a route for a call between any first and any second system of said network via one of a plurality of third systems of said network comprising the steps of:
assembling (257, 258, 275, 259) in said first system (1) first availability data of communication paths between said first system and ones of said third systems (3-8);
assembling (257, 258, 275, 259) in said second system (2) second availability data of communication paths between said second system and ones of said third systems;
CHARACTERIZED IN THAT
the method further comprises:
converting said second availability data into second load state data;
converting said first availability data into first load state data;
transmitting (163) said second load state data from said second system to said first system; and
determining (165-185) a route in said first system between said first and said second systems via one of said third systems based on said first and said second load state data, wherein said load state data is one of a plurality of discrete load grades.

2. The method of claim 1 further comprising the steps of:
before executing said determining step, testing whether a direct communication path between the first and the second system is available; and
if the testing step indicates that no direct communication path is available, executing the determining step; and
if the testing step indicates that a direct communication path is available, determining that the call is to be routed over the direct communication path.

3. The method of claim 1 wherein said step of transmitting second load state data comprises the step of transmitting said second load state data over a data network.

4. The method of claim 3 wherein said transmitting second load state data comprises the step of transmitting said second load state data periodically.

5. The method of claim 3 wherein said transmitting second load state data comprises the step of transmitting second load state data over a common channel signaling network.

6. The method of claim 3 wherein said step of transmitting second load state data comprises the step of transmitting said second load state data responsive to a request for said second load state data from said first system.

7. The method of claim 6 wherein said determining step is made responsive to second load state data received in response to a previous request from said first system.

8. The method of claim 7 wherein said determining step comprises the step of requesting updated load state data from said second system for use in a subsequent determining step for a call between said first system and said second system.

9. The method of claim 1 wherein said load state data comprises data indicating one of a plurality of grades of availability, including lightly loaded and heavily loaded grades of availability for communication path groups and wherein said determining step comprises the step of:
selecting a route via a third system having lightly loaded communication path groups between said third system and said first and second systems; and
if no routes are available via a third system having lightly loaded communication path groups between said third system and said first and second systems, selecting a route via a selected third system having heavily loaded communication path groups in at least one of the groups between said selected third system and said first and second systems.

10. The method of claim 9 wherein said lightly loaded grade comprises a subgrade for very lightly loaded groups and a subgrade for moderately lightly loaded groups, wherein said very lightly loaded groups have a higher percentage of available communication paths than said moderately lightly loaded groups, and said step of selecting a route via a third system having lightly loaded groups comprises the step of:
selecting a route via a third system having very lightly loaded communication path groups between that third system and said first and second systems in preference to a route via a third system in which at least one of the groups between that system and said first and second systems is moderately lightly loaded.

11. The method of claim 10 wherein said step of selecting a route via a selected third system only having heavily loaded communication path groups in at least one of the groups comprises the step of selecting a route only if blocking between said first and said second systems is more than a predetermined threshold.

12. The method of claim 10 wherein routes between switching systems comprise routes for transmitting different services requiring different transmission requirements, said routes having communication paths capable of transmitting for a plurality of different transmission requirements, wherein data for load states are maintained for each transmission type, and wherein said determining step comprises the step of:
determining load state data of communication paths capable of offering a requested transmission service.

13. The method of claim 10 wherein said first system further stores a list of third systems through which calls between said first and second systems are allowed to be routed, wherein the determining step comprises the step of:
determining a route between said first and said systems via one of said third systems comprised in said list of third systems.

14. The method of claim 9 wherein said plurality of grades comprises a reserved grade comprising communication path groups with paths available for calls, using two links, only if no other routes have available communication paths and if a high blocking rate between the first system and the second system has been encountered.

15. The method of claim 14 wherein routes between switching systems comprise routes for transmitting different services requiring different transmission requirements, said routes having communication paths capable of transmitting for a plurality of different transmission requirements, and wherein communication paths are reserved for use for a particular transmission capability when the blocking for that capability exceeds a pre-specified threshold.

16. The method of claim 15 wherein said communication paths are reserved for use for said particular transmission capability if the number of completed calls between the two switches connected by these communication paths and using said particular transmission capability is less than a pre-specified threshold.

17. The method of claim 9 wherein a plurality of types of service are provided over a communication path group, wherein said plurality of grades comprises a reserved grade, and wherein the reserved grade of service is assignable to a subset of said plurality of types of service.

18. The method of claim 17 wherein said subset comprises services experiencing a high blocking rate between said first and said second system.

19. The method of claim 17 wherein said subset comprises services having fewer than a minimum desired number of calls completed.

20. The method of claim 17 wherein the reserved grade is assignable to different ones of the plurality of types of service in response to blocking for the different ones exceeding a threshold individual to each different one.

21. The method of claim 17 wherein the reserved grade is assignable to different ones of the plurality of services if the number of completed calls between the two switches for ones of said plurality of services is less than a pre-specified threshold.

22. The method of claim 9 wherein a threshold of each of said plurality of bands is a function of the offered call load.

23. The method of claim 9 wherein said determining step selects among 2-link routes having the least heavily loaded of the more heavily loaded band for the route, that route having a link with the least heavily loaded band among said 2-link routes.

24. The method of claim 9 wherein said plurality of grades comprises a reserved grade comprising communication path groups with paths available for calls using two links only if no other routes have available paths in groups not in the reserved grade load status and if there is no direct route between the first system and the second system.

25. The method of claim 24 wherein the number of communication paths reserved is a function of the offered call load and the blockage rate.

26. The method of claim 25 wherein the number of communication paths reserved is zero if the offered call load is less than the current call load.

27. The method of claim 25 wherein the thresholds for the load bands of communication path groups are adjusted by the number of reserved communication paths.

28. The method of claim 9 wherein said availability data comprises a plurality of bits each bit representing availability at or in excess of a particular one of said plurality of bands.

29. Apparatus, in a first telecommunications switching system, for determining a route through a telecommunications network comprising:
control means (20), comprising storage (22) for a plurality of tables (24, 25, 26) and a program (23), responsive to data stored in said plurality of tables, and operable under the control of said program for:
responsive to an incoming call (101) to said first system and to data stored in a translation table (26) of said control means, determining (103) that said call should be routed to a second switching system;
assembling (257, 258, 275, 259) first availability data of first communication paths between said first system and ones of third switching systems connected to said first system by said first communication paths;
wherein said second switching system has control means for assembling second availability data for communication paths between said second system and ones of said third systems connected to said second system by second communication paths;
CHARACTERIZED IN THAT the control means is further operable under the control of said program for
converting said first availability data into first load state data;
receiving (163) second load state data from said second switching system; and
determining (165-185) a route between said first and said second systems via one of said third systems based on said first and said second load state data;
wherein said control means of said second switching system has means for converting said second availability data into second load state data;
wherein said first and second load state data specifies which of a plurality of grades, ranging from lightly loaded to heavily loaded to blocked, pertain to the availability of communication paths between a third system and said first and said second systems, respectively, and wherein said determining comprises determining a route via a third system having communication path groups to said first and said second systems, the more heavily loaded of said groups to said first and said second systems having the least heavily loaded grade of communication path availability.

30. The apparatus of claim 29 wherein said plurality of grades comprises a reserved grade comprising communication path groups with paths available for calls, using two links, only if no other routes have available circuits and if a high blocking rate between the first system and the second system has been encountered.

31. The apparatus of claim 29 wherein said plurality of grades comprises a reserved grade comprising communication path groups with paths available for calls using two links only if no other routes have available paths in groups not in the reserved grade load states and if there is no direct route between the first system and the second system.

32. The apparatus of claim 29 wherein a plurality of types of service are provided over a communication path group, wherein said plurality of grades comprises a reserved grade, and wherein the reserved grade of service is assignable to a subset of said plurality of types of service.

33. The apparatus of claim 32 wherein said subset comprises services experiencing a high blocking rate between said first and said second system.

34. The apparatus of claim 32 wherein said subset comprises services having fewer than a minimum desired number of calls completed.

35. The apparatus of claim 29 wherein selecting a route via a selected third system only having heavily loaded communication path groups in at least one of the groups comprises selecting a route only if blocking between said first and said second systems is more than a predetermined threshold.

36. The apparatus of claim 29 wherein said lightly loaded grade comprises a subgrade for very lightly loaded groups and a subgrade for moderately lightly loaded groups, wherein said very lightly loaded groups have a higher percentage of available communication paths than said moderately lightly loaded groups, and wherein selecting a route via a third system having lightly loaded groups comprises:
selecting a route via a third system having very lightly loaded communication path groups between that third system and said first and second systems in preference to a route via a third system in which at least one of the groups between that system and said first and second systems is moderately lightly loaded.

37. The apparatus of claim 29 wherein routes between switching systems comprise routes for transmitting different services requiring different transmission requirements, said routes having a communication path capable of transmitting for a plurality of different transmission requirements, wherein data for load grades are maintained for each transmission type, and wherein said determining comprises determining availability data of communication paths capable of offering a requested transmission service.

38. The apparatus of claim 29 wherein said control means further comprises storage for a list of third systems through which calls between said first and second systems are allowed to be routed, wherein said determining step comprises:
determining a route between said first and said second systems via one of said third systems comprised in said list of third systems.

39. The apparatus of claim 29 wherein the control means is further operable under the control of said program for transmitting said first load state data to ones of said second and third systems for permitting each of said ones to determine a route between said each system and said first system.

40. The apparatus of claim 39 wherein said control means is further operable under program control for periodically preparing a data message comprising said first load state data for transmission to ones of said second and third systems.

41. The apparatus of claim 39 wherein said control means is further operable under program control for preparing a data message for transmission to said second system for requesting said second load state data.

42. The apparatus of claim 41 wherein said determining is made responsive to load state data received in response to a previous request from said first system.

43. The apparatus of claim 29 wherein said control means is further operable under program control for testing whether a direct communication path between the first and the second system is available; and
if said testing indicates that no direct communication path is available, performing the determining a route via one of said third systems operation; and
if said testing step indicates that a direct communication path is available, determining that the call is to be routed over the direct communication path.

## Patentansprüche

1. Verfahren zur Bestimmung, in einem Telekommunikationsnetz mit einer Mehrzahl von Vermittlungssystemen, eines Leitweges für eine Verbindung zwischen einem beliebigen ersten und einem beliebigen zweiten System des besagten Netzes über eines einer Mehrzahl von dritten Systemen des besagten Netzes mit folgenden Schritten:
Zusammenstellen (257, 258, 275, 259) im besagten ersten System (1) von ersten Verfügbarkeitsdaten von Kommunikationswegen zwischen besagtem ersten System und jeweiligen der besagten dritten Systeme (3-8);
Zusammenstellen (257, 258, 275, 259) im besagten zweiten System (2) von zweiten Verfügbarkeitsdaten von Kommunikationswegen zwischen besagtem zweiten System und jeweiligen der besagten dritten Systeme;
dadurch gekennzeichnet, daß das Verfahren weiterhin folgendes umfaßt:
Umwandeln der besagten zweiten Verfügbarkeitsdaten in zweite Belastungszustandsdaten;
Umwandeln der besagten ersten Verfügbarkeitsdaten in erste Belastungszustandsdaten;
Übertragen (163) der besagten zweiten Belastungszustandsdaten vom besagten zweiten System zum besagten ersten System; und
Bestimmen (165-185) eines Leitweges im besagten ersten System zwischen besagtem ersten und besagtem zweiten System über eines der besagten dritten Systeme auf Grundlage der besagten ersten und besagten zweiten Belastungszustandsdaten, wobei die besagten Belastungszustandsdaten eine von einer Mehrzahl einzelner Belastungsstufen darstellen.

2. Verfahren nach Anspruch 1, weiterhin mit folgenden Schritten:
vor Ausführung des besagten Schrittes des Bestimmens Prüfen, ob ein direkter Kommunikationsweg zwischen dem ersten und dem zweiten System zur Verfügung steht; und
wenn der Prüfschritt anzeigt, daß kein direkter Kommunikationsweg zur Verfügung steht, Ausführen des Schrittes des Bestimmens; und
wenn der Prüfschritt anzeigt, daß ein direkter Kommunikationsweg zur Verfügung steht, Bestimmen, daß die Verbindung über den direkten Kommunikationsweg zu leiten ist.

3. Verfahren nach Anspruch 1, wobei der besagte Schritt des Übertragens von zweiten Belastungszustandsdaten den Schritt des Übertragens der besagten zweiten Belastungszustandsdaten über ein Datennetz umfaßt.

4. Verfahren nach Anspruch 3, wobei das besagte Übertragen von zweiten Belastungszustandsdaten den Schritt des periodischen Übertragens der besagten zweiten Belastungszustandsdaten umfaßt.

5. Verfahren nach Anspruch 3, wobei das besagte Übertragen von zweiten Belastungszustandsdaten den Schritt des Übertragens von zweiten Belastungszustandsdaten über ein Zentralkanalzeichengabenetz umfaßt.

6. Verfahren nach Anspruch 3, wobei der besagte Schritt des Übertragens von zweiten Belastungszustandsdaten den Schritt des Übertragens der besagten zweiten Belastungszustandsdaten als Reaktion auf eine Anforderung nach den besagten zweiten Belastungszustandsdaten vom besagten ersten System umfaßt.

7. Verfahren nach Anspruch 6, wobei der besagte Schritt des Bestimmens als Reaktion auf als Reaktion auf eine vorherige Anforderung vom besagten ersten System empfangene zweite Belastungszustandsdaten durchgeführt wird.

8. Verfahren nach Anspruch 7, wobei der besagte Schritt des Bestimmens den Schritt des Anforderns von aktualisierten Belastungszustandsdaten vom besagten zweiten System zur Verwendung bei einem nachfolgenden Schritt des Bestimmens für eine Verbindung zwischen dem besagten ersten System und dem besagten zweiten System umfaßt.

9. Verfahren nach Anspruch 1, wobei die besagten Belastungszustandsdaten Daten umfassen, die eine von einer Mehrzahl von Verfügbarkeitsstufen einschließlich schwach belasteter und stark belasteter Verfügbarkeitsstufen für Kommunikationswegegruppen anzeigen, und wobei der besagte Schritt des Bestimmens den folgenden Schritt umfaßt:
Auswählen eines Leitweges über ein drittes System mit schwach belasteten Kommunikationswegegruppen zwischen besagtem dritten System und besagtem ersten und zweiten System; und
wenn keine Leitwege über ein drittes System mit schwach belasteten Kommunikationswegegruppen zwischen besagtem dritten System und besagtem ersten und zweiten System zur Verfügung stehen, Auswählen eines Leitweges über ein ausgewähltes drittes System mit stark belasteten Kommunikationswegegruppen in mindestens einer der Gruppen zwischen besagtem ausgewählten dritten System und besagtem ersten und zweiten System.

10. Verfahren nach Anspruch 9, wobei die besagte schwach belastete Stufe eine Unterstufe für sehr schwach belastete Gruppen und eine Unterstufe für mäßig schwach belastete Gruppen umfaßt, wobei die besagten sehr schwach belasteten Gruppen einen höheren Prozentsatz verfügbarer Kommunikationswege aufweisen als die besagten mäßig schwach belasteten Gruppen und der besagte Schritt des Auswählens eines Leitweges über ein drittes System mit schwach belasteten Gruppen folgendes umfaßt:
Auswählen eines Leitweges über ein drittes System mit sehr schwach belasteten Kommunikationswegegruppen zwischen diesem dritten System und besagtem ersten und zweiten System anstatt eines Leitweges über ein drittes System, in dem mindestens eine der Gruppen zwischen diesem System und besagtem ersten und zweiten System mäßig schwach belastet ist.

11. Verfahren nach Anspruch 10, wobei der besagte Schritt des Auswählens eines Leitweges über ein ausgewähltes drittes System mit nur stark belasteten Kommunikationswegegruppen in mindestens einer der Gruppen den Schritt des Auswählens eines Leitweges nur dann, wenn die Blockierung zwischen besagtem ersten und besagtem zweiten System über einem vorbestimmten Schwellwert liegt, umfaßt.

12. Verfahren nach Anspruch 10, wobei Leitwege zwischen Vermittlungssystemen Leitwege für die Übertragung verschiedener Dienste umfassen, die unterschiedliche Übertragungserfordernisse beanspruchen, wobei die besagten Leitwege Kommunikationswege aufweisen, die für eine Mehrzahl unterschiedlicher Übertragungserfordernisse übertagen können, wobei Daten für Belastungszustände für jede Übertragungsart unterhalten werden und wobei der besagte Bestimmungsschritt den folgenden Schritt umfaßt:
Bestimmen von Belastungszustandsdaten von Kommunikationswegen, die einen angeforderten Übertragungsdienst anbieten können.

13. Verfahren nach Anspruch 10, wobei das besagte erste System weiterhin eine Liste dritter Systeme speichert, durch die Verbindungen zwischen besagtem ersten und zweiten System geleitet werden dürfen, wobei der Schritt des Bestimmens folgendes umfaßt:
Bestimmen eines Leitweges zwischen besagtem ersten und besagtem zweiten System über eines der in der besagten Liste dritter Systeme enthaltenen besagten dritten Systeme.

14. Verfahren nach Anspruch 9, wobei die besagte Mehrzahl von Stufen eine reservierte Stufe mit Kommunikationswegegruppen umfaßt, wobei Wege für Verbindungen unter Verwendung von zwei Strecken nur dann verfügbar sind, wenn keine anderen Leitwege verfügbare Kommunikationswege aufweisen und wenn eine hohe Blockierungsrate zwischen dem ersten System und dem zweiten System angetroffen worden ist.

15. Verfahren nach Anspruch 14, wobei Leitwege zwischen Vermittlungssystemen Leitwege für die Übertragung verschiedener Dienste umfassen, die unterschiedliche Übertragungserfordernisse beanspruchen, wobei die besagten Leitwege Kommunikationswege aufweisen, die für eine Mehrzahl unterschiedlicher Übertragungserfordernisse übertragen können, und wobei Kommunikationswege zur Verwendung für eine bestimmte Übertragungsfähigkeit reserviert sind, wenn die Blockierung für diese Fähigkeit einen vorgegebenen Schwellwert überschreitet.

16. Verfahren nach Anspruch 15, wobei die besagten Kommunikationswege zur Verwendung für die besagte bestimmte Übertragungsfähigkeit reserviert sind, wenn die Anzahl hergestellter Verbindungen zwischen den zwei durch diese Kommunikationswege verbundenen und die besagte bestimmte Übertragungsfähigkeit benutzenden Vermittlungen geringer als ein vorgegebener Schwellwert ist.

17. Verfahren nach Anspruch 9, wobei eine Mehrzahl von Dienstarten über eine Kommunikationswegegruppe bereitgestellt wird, wobei die besagte Mehrzahl von Stufen eine reservierte Stufe umfaßt und wobei die reservierte Dienststufe einer Teilmenge der besagten Mehrzahl von Dienstarten zuweisbar ist.

18. Verfahren nach Anspruch 17, wobei die besagte Teilmenge Dienste umfaßt, die eine hohe Blockierungsrate zwischen besagtem ersten und besagtem zweiten System erfahren.

19. Verfahren nach Anspruch 17, wobei die besagte Teilmenge Dienste mit weniger als einer minimalen gewünschten Anzahl von hergestellten Verbindungen umfaßt.

20. Verfahren nach Anspruch 17, wobei die reservierte Stufe unterschiedlichen der Mehrzahl von Dienstarten zuweisbar ist, als Reaktion auf Blockierung für die unterschiedlichen, die einen jeder unterschiedlichen einzeln zugeordneten Schwellwert überschreiten.

21. Verfahren nach Anspruch 17, wobei die reservierte Stufe unterschiedlichen der Mehrzahl von Diensten zuweisbar ist, wenn die Anzahl hergestellter Verbindungen zwischen den zwei Vermittlungen für jeweilige der besagten Mehrzahl von Diensten unter einem vorgegebenen Schwellwert liegt.

22. Verfahren nach Anspruch 9, wobei ein Schwellwert jedes der besagten Mehrzahl von Bändern eine Funktion des Verkehrsangebots ist.

23. Verfahren nach Anspruch 9, wobei der besagte Schritt des Bestimmens unter Leitwegen mit 2 Strecken mit dem am wenigsten belasteten des stärker belasteten Bandes als Leitweg auswählt, wobei dieser Leitweg eine Strecke mit dem am wenigsten belasteten Band unter den besagten Leitwegen mit 2 Strecken aufweist.

24. Verfahren nach Anspruch 9, wobei die besagte Mehrzahl von Stufen eine reservierte Stufe mit Kommunikationswegegruppen umfaßt, wobei Wege für Verbindungen unter Verwendung von zwei Strecken nur dann verfügbar sind wenn keine anderen Leitwege verfügbare Wege in Gruppen aufweisen, die sich nicht im Belastungszustand Reservierte Stufe befinden, und wenn es keinen direkten Leitweg zwischen dem ersten System und dem zweiten System gibt.

25. Verfahren nach Anspruch 24, wobei die Anzahl reservierter Kommunikationswege eine Funktion des Verkehrsangebots und der Blockierungsrate ist.

26. Verfahren nach Anspruch 25, wobei die Anzahl reservierter Kommunikationswege Null beträgt, wenn das Verkehrsangebot unter der aktuellen Verbindungsbelastung liegt.

27. Verfahren nach Anspruch 25, wobei die Schwellwerte für die Belastungsbänder von Kommunikationswegegruppen durch die Anzahl reservierter Kommunikationswege eingestellt werden.

28. Verfahren nach Anspruch 9, wobei die besagten Verfügbarkeitsdaten eine Mehrzahl von Bit umfassen, wobei jedes Bit Verfügbarkeit bei einem Band oder über ein bestimmtes der besagten Mehrzahl von Bändern hinaus darstellt.

29. Vorrichtung in einem ersten Telekommunikationsvermittlungssystem zum Bestimmen eines Leitweges durch ein Telekommunikationsnetz mit folgenden:
Steuermitteln (20) mit Speicherung (22) für eine Mehrzahl von Tabellen (24, 25, 26) und einem Programm (23), die auf in der besagten Mehrzahl von Tabellen gespeicherte Daten reagieren und unter Steuerung des besagten Programms betrieben werden können, um:
als Reaktion auf eine an besagtem ersten System ankommende Verbindung (101) und auf in einer Umsetzungstabelle (26) der besagten Steuermittel gespeicherte Daten zu bestimmen (103), daß die besagte Verbindung zu einem zweiten Vermittlungssystem geleitet werden soll;
und erste Verfügbarkeitsdaten erster Kommunikationswege zwischen besagtem ersten System und jeweiligen von über besagte erste Kommunikationswege mit dem besagten ersten System verbundenen dritten Vermittlungssystemen zusammenzustellen (257, 258, 275, 259);
wobei das besagte zweite Vermittlungssystem Steuermittel zum Zusammenstellen zweiter Verfügbarkeitsdaten für Kommunikationswege zwischen besagtem zweiten System und jeweiligen von über zweite Kommunikationswege mit dem besagten zweiten System verbundenen besagten dritten Systemen aufweist;
dadurch gekennzeichnet, daß das Steuermittel weiterhin unter Steuerung des besagten Programms betrieben werden kann, um
besagte erste Verfügbarkeitsdaten in erste Belastungszustandsdaten umzuwandeln;
zweite Belastungszustandsdaten vom besagten zweiten Vermittlungssystem aufzunehmen (163); und
einen Leitweg zwischen besagtem ersten und besagtem zweiten System über eines der besagten dritten Systeme auf Grundlage der besagten ersten und besagten zweiten Belastungszustandsdaten zu bestimmen (165-185);
wobei das besagte Steuermittel des besagten zweiten Vermittlungssystems Mittel zum Umwandeln der besagten zweiten Verfügbarkeitsdaten in zweite Belastungszustandsdaten aufweist;
wobei die besagten ersten und zweiten Belastungszustandsdaten angeben, welche einer Mehrzahl von Stufen im Bereich von schwach belastet bis stark belastet bis blockiert auf die Verfügbarkeit von Kommunikationswegen zwischen einem dritten System und besagtem ersten bzw. besagtem zweiten System bezogen sind und wobei das besagte Bestimmen das Bestimmen eines Leitweges über ein drittes System mit Kommunikationswegegruppen zu besagtem ersten und besagtem zweiten System umfaßt, wobei die stärker belastete der besagten Gruppen zu besagtem ersten und besagtem zweiten System die am wenigsten belastete Stufe von Kommunikationswegeverfügbarkeit aufweist.

30. Vorrichtung nach Anspruch 29, wobei die besagte Mehrzahl von Stufen eine reservierte Stufe mit Kommunikationswegegruppen umfaßt, wobei Wege für Verbindungen unter Verwendung von zwei Strecken nur dann verfügbar sind, wenn keine anderen Leitwege verfügbare Leitungen aufweisen und wenn eine hohe Blockierungsrate zwischen dem ersten System und dem zweiten System angetroffen worden ist.

31. Vorrichtung nach Anspruch 29, wobei die besagte Mehrzahl von Stufen eine reservierte Stufe mit Kommunikationswegegruppen umfaßt, wobei Wege für Verbindungen unter Verwendung von zwei Strecken nur dann verfügbar sind, wenn keine anderen Leitwege verfügbare Wege in Gruppen aufweisen, die sich nicht im Belastungszustand Reservierte Stufe befinden, und wenn es keinen direkten Leitweg zwischen dem ersten System und dem zweiten System gibt.

32. Vorrichtung nach Anspruch 29, wobei eine Mehrzahl von Dienstarten über eine Kommunikationswegegruppe bereitgestellt wird, wobei die besagte Mehrzahl von Stufen eine reservierte Stufe umfaßt und wobei die reservierte Dienststufe einer Teilmenge der besagten Mehrzahl von Dienstarten zuweisbar ist.

33. Vorrichtung nach Anspruch 32, wobei die besagte Teilmenge Dienste umfaßt, die eine hohe Blockierungsrate zwischen besagtem ersten und besagtem zweiten System erfahren.

34. Vorrichtung nach Anspruch 32, wobei die besagte Teilmenge Dienste mit weniger als einer minimalen gewünschten Anzahl von hergestellten Verbindungen umfaßt.

35. Vorrichtung nach Anspruch 29, wobei das Auswählen eines Leitweges über ein ausgewähltes drittes System mit nur stark belasteten Kommunikationswegegruppen in mindestens einer der Gruppen das Auswählen eines Leitweges nur dann, wenn die Blockierung zwischen besagtem ersten und besagtem zweiten System über einem vorbestimmten Schwellwert liegt, umfaßt.

36. Vorrichtung nach Anspruch 29, wobei die besagte schwach belastete Stufe eine Unterstufe für sehr schwach belastete Gruppen und eine Unterstufe für mäßig schwach belastete Gruppen umfaßt, wobei die besagten sehr schwach belasteten Gruppen einen höheren Prozentsatz verfügbarer Kommunikationswege aufweisen als die besagten mäßig schwach belasteten Gruppen und wobei das Auswählen eines Leitweges über ein drittes System mit schwach belasteten Gruppen folgendes umfaßt:
Auswählen eines Leitweges über ein drittes System mit sehr schwach belasteten Kommunikationswegegruppen zwischen diesem dritten System und besagtem ersten und zweiten System anstatt eines Leitweges über ein drittes System, in dem mindestens eine der Gruppen zwischen diesem System und besagtem ersten und zweiten System mäßig schwach belastet ist.

37. Vorrichtung nach Anspruch 29, wobei Leitwege zwischen Vermittlungssystemen Leitwege für die Übertragung verschiedener Dienste umfassen, die unterschiedliche Übertragungserfordernisse beanspruchen, wobei die besagten Leitwege einen Kommunikationsweg aufweisen, der für eine Mehrzahl unterschiedlicher Übertragungserfordernisse übertragen kann, wobei Daten für Belastungsstufen für jede Übertragungsart unterhalten werden und wobei das besagte Bestimmen das Bestimmen von Verfügbarkeitsdaten von Kommunikationswegen, die einen angeforderten Übertragungsdienst anbieten können, umfaßt.

38. Vorrichtung nach Anspruch 29, wobei das besagte Steuermittel weiterhin Speicherung für eine Liste dritter Systeme umfaßt, durch die Verbindungen zwischen besagtem ersten und zweiten System geleitet werden dürfen, wobei der besagte Schritt des Bestimmens folgendes umfaßt:
Bestimmen eines Leitweges zwischen besagtem ersten und besagtem zweiten System über eines der besagten, in der besagten Liste dritter Systeme enthaltenen besagten dritten Systeme.

39. Vorrichtung nach Anspruch 29, wobei die Steuermittel weiterhin unter Steuerung des besagten Programms betrieben werden können, um die besagten ersten Belastungszustandsdaten jeweiligen der besagten zweiten und dritten Systeme zu übertragen, um jedem der besagten jeweiligen die Bestimmung eines Leitweges zwischen besagtem jeden System und besagtem ersten System zu erlauben.

40. Vorrichtung nach Anspruch 39, wobei besagtes Steuermittel weiterhin unter Programmsteuerung betrieben werden kann, um periodisch eine Datennachricht mit besagten ersten Belastungszustandsdaten zur Übertragung zu jeweiligen der besagten zweiten und dritten Systeme vorzubereiten.

41. Vorrichtung nach Anspruch 39, wobei besagtes Steuermittel weiterhin unter Programmsteuerung betrieben werden kann, um eine Datennachricht zur Übertragung zum besagten zweiten System zur Anforderung der besagten zweiten Belastungszustandsdaten vorzubereiten.

42. Vorrichtung nach Anspruch 41, wobei das besagtes Bestimmen als Reaktion auf als Reaktion auf eine vorherige Anforderung vom besagten ersten System empfangene Belastungszustandsdaten durchgeführt wird.

43. Vorrichtung nach Anspruch 29, wobei besagtes Steuermittel weiterhin unter Programmsteuerung betrieben werden kann, um zu prüfen, ob ein direkter Kommunikationsweg zwischen dem ersten und dem zweiten System zur Verfügung steht; und
wenn die besagte Prüfung anzeigt, daß kein direkter Kommunikationsweg zur Verfügung steht, Durchführen der Operation des Bestimmens eines Leitweges über eines der besagten dritten Systeme; und
wenn der besagte Prüfschritt anzeigt, daß ein direkter Kommunikationsweg zur Verfügung steht, Bestimmen, daß die Verbindung über den direkten Kommunikationsweg zu leiten ist.

## Revendications

1. Procédé de détermination, dans un réseau de télécommunications comprenant une pluralité de systèmes de commutation, d'un acheminement d'un appel entre un premier système quelconque et un deuxième système quelconque dudit réseau par l'intermédiaire de l'un d'une pluralité de troisièmes systèmes dudit réseau comprenant les étapes:
d'assemblage (257, 258, 275, 259) dans ledit premier système (1) de premières données de disponibilité de chemins de communication entre ledit premier système et des systèmes desdits troisièmes systèmes (3 à 8);
d'assemblage (257, 258, 275, 259) dans ledit deuxième système (2) de deuxièmes données de disponibilité de chemins de communication entre ledit deuxième système et des systèmes desdits troisièmes systèmes;
CARACTERISE EN CE QUE
le procédé comprend en outre:
la conversion desdites deuxièmes données de disponibilité en deuxièmes données d'état de charge;
la conversion desdites premières données de disponibilité en premières données d'état de charge;
la transmission (163) desdites deuxièmes données d'état de charge dudit deuxième système audit premier système; et
la détermination (165 à 185) d'un acheminement dans ledit premier système entre ledit premier et ledit deuxième système par l'intermédiaire de l'un desdits troisièmes systèmes d'après lesdites premières et deuxièmes données d'état de charge, dans lequel lesdites données d'état de charge sont l'une d'une pluralité de niveaux de charge discrets.

2. Procédé selon la revendication 1, comprenant en outre les étapes:
avant l'exécution de ladite étape de détermination, d'essai si un chemin de communication direct est disponible entre le premier et le deuxième système; et
si l'étape d'essai indique qu'il n'existe aucun chemin de communication direct disponible, d'exécution de l'étape de détermination; et
si l'étape d'essai indique qu'il existe un chemin de communication direct disponible, de détermination que l'appel doit être acheminé par le chemin de communication direct.

3. Procédé selon la revendication 1, dans lequel ladite étape de transmission des deuxièmes données d'état de charge comprend l'étape de transmission desdites deuxièmes données d'état de charge sur un réseau de données.

4. Procédé selon la revendication 3, dans lequel ladite transmission des deuxièmes données d'état de charge comprend l'étape de transmission desdites deuxièmes données de charge périodiquement.

5. Procédé selon la revendication 3, dans lequel ladite transmission des deuxièmes données d'état de charge comprend l'étape de transmission des deuxièmes données de charge sur un réseau de signalisation à canal sémaphore.

6. Procédé selon la revendication 3, dans lequel ladite étape de transmission des deuxièmes données d'état de charge comprend l'étape de transmission desdites deuxièmes données de charge à la suite d'une demande par ledit premier système desdites deuxièmes données d'état de charge.

7. Procédé selon la revendication 6, dans lequel ladite étape de détermination est effectuée à la suite des deuxièmes données d'état de charge reçues en réponse à une demande précédente par ledit premier système.

8. Procédé selon la revendication 7, dans lequel ladite étape de détermination comprend l'étape de demande de données d'état de charge actualisées à partir dudit deuxième système pour les utiliser dans une étape de détermination ultérieure pour un appel entre ledit premier système et ledit deuxième système.

9. Procédé selon la revendication 1, dans lequel lesdites données d'état de charge comprennent des données indiquant l'un d'une pluralité de niveaux de disponibilité, comportant des niveaux légèrement chargés et fortement chargés de disponibilité de groupes de chemins de communication et dans lequel ladite étape de détermination comprend l'étape de:
sélection d'un acheminement par l'intermédiaire d'un troisième système ayant des groupes de chemins de communication légèrement chargés entre ledit troisième système et lesdits premier et deuxième systèmes; et
s'il n'existe aucun acheminement par l'intermédiaire d'un troisième système ayant des groupes de chemins de communication légèrement chargés entre ledit troisième système et lesdits premier et deuxième systèmes, sélection d'un acheminement par l'intermédiaire d'un troisième système sélectionné ayant des groupes de chemins de communication fortement chargés dans au moins un des groupes entre ledit troisième système sélectionné et lesdits premier et deuxième systèmes.

10. Procédé selon la revendication 9, dans lequel ledit niveau légèrement chargé comprend un sous-niveau pour les groupes très légèrement chargés et un sous-niveau pour les groupes modérément légèrement chargés, dans lequel lesdits groupes très légèrement chargés ont un pourcentage de chemins de communication disponibles supérieur à celui desdits groupes modérément légèrement chargés, et ladite étape de sélection d'un acheminement par l'intermédiaire d'un troisième système ayant des groupes légèrement chargés comprend l'étape de:
sélection d'un acheminement par l'intermédiaire d'un troisième système ayant des groupes de chemins de communication très légèrement chargés entre ce troisième système et lesdits premier et deuxième systèmes de préférence à un acheminement par l'intermédiaire d'un troisième système dans lequel au moins l'un des groupes entre ce système et lesdits premier et deuxième systèmes est modérément légèrement chargé.

11. Procédé selon la revendication 10, dans lequel ladite étape de sélection d'un acheminement par l'intermédiaire d'un troisième système sélectionné ayant seulement des groupes de chemins de communication fortement chargés dans au moins l'un des groupes comprend l'étape de sélection d'un acheminement seulement si le blocage entre ledit premier et ledit deuxième système dépasse un seuil prédéterminé.

12. Procédé selon la revendication 10, dans lequel les acheminements entre les systèmes de commutation comprennent des acheminements pour transmettre des services différents aux exigences de transmission différentes, lesdits acheminements ayant des chemins de communication capables de transmission selon une pluralité d'exigences de transmission différentes, dans lequel les données des états de charge sont tenues à jour pour chaque type de transmission, et dans lequel ladite étape de détermination comprend l'étape de:
détermination des données d'état de charge des chemins de communication capables d'offrir un service de transmission demandé.

13. Procédé selon la revendication 10, dans lequel ledit premier système mémorise en outre une liste de troisièmes systèmes par lesquels les appels entre lesdits premier et deuxième systèmes peuvent être acheminés, dans lequel l'étape de détermination comprend l'étape de:
détermination d'un acheminement entre lesdits premier et deuxième systèmes par l'intermédiaire de l'un desdits troisièmes systèmes compris dans ladite liste de troisièmes systèmes.

14. Procédé selon la revendication 9, dans lequel ladite pluralité de niveaux comprend un niveau réservé comprenant les groupes de chemins de communication avec des chemins disponibles pour les appels, utilisant deux liaisons, seulement si aucun autre acheminement n'a de chemins de communication disponibles et si un taux de blocage élevé entre le premier système et le deuxième système a été rencontré.

15. Procédé selon la revendication 14, dans lequel les acheminements entre les systèmes de commutation comprennent des acheminements pour transmettre des services différents aux exigences de transmission différentes, lesdits acheminements ayant des chemins de communication capables de transmission selon une pluralité d'exigences de transmission différentes, et dans lequel les chemins de communication sont réservés pour être utilisés pour une capacité de transmission particulière quand le blocage relatif à cette capacité dépasse un seuil préspécifié.

16. Procédé selon la revendication 15, dans lequel lesdits chemins de communication sont réservés pour être utilisés pour cette capacité de transmission particulière si le nombre d'appels efficaces entre les deux commutateurs connectés par ces chemins de communication et utilisant ladite capacité de transmission particulière est inférieur à un seuil préspécifié.

17. Procédé selon la revendication 9, dans lequel une pluralité de types de services est fournie sur un groupe de chemins de communication, dans lequel ladite pluralité de niveaux comprend un niveau réservé, et dans lequel le niveau réservé de service peut être affecté à un sous-ensemble de ladite pluralité de types de services.

18. Procédé selon la revendication 17, dans lequel ledit sous-ensemble comprend des services connaissant un taux élevé de blocage entre ledit premier et ledit deuxième système.

19. Procédé selon la revendication 17, dans lequel ledit sous-ensemble comprend des services ayant moins qu'un nombre désiré minimum d'appels efficaces.

20. Procédé selon la revendication 17, dans lequel le niveau réservé peut être affecté à des types de services différents de ladite pluralité de types de services en réponse au blocage des types de services différents dépassant un seuil individuel pour chaque type de service différent.

21. Procédé selon la revendication 17, dans lequel le niveau réservé peut être affecté à des types de services différents de ladite pluralité de services si le nombre d'appels efficaces entre les deux commutateurs pour des services de ladite pluralité de services est inférieur à un seuil préspécifié.

22. Procédé selon la revendication 9, dans lequel un seuil de chacune de ladite pluralité de bandes est fonction de la charge d'appels offerte.

23. Procédé selon la revendication 9, dans lequel ladite étape de détermination sélectionne parmi des acheminements à 2 liaisons ayant la moins fortement chargée de la bande plus fortement chargée pour l'acheminement, l'acheminement ayant une liaison avec la bande la moins fortement chargée parmi lesdits acheminements à 2 liaisons.

24. Procédé selon la revendication 9, dans lequel ladite pluralité de niveaux comprend un niveau réservé comprenant des groupes de chemins de communication avec des chemins disponibles pour des appels utilisant deux liaisons seulement si aucun autre acheminement n'a de chemins disponibles dans des groupes n'ayant pas l'état de charge de niveau réservé et s'il n'existe pas d'acheminement direct entre le premier système et le deuxième système.

25. Procédé selon la revendication 24, dans lequel le nombre de chemins de communication réservés est fonction de la charge d'appels offerte et du taux de blocage.

26. Procédé selon la revendication 25, dans lequel le nombre de chemins de communication réservés est nul si la charge d'appels offerte est inférieure à la charge d'appels en cours.

27. Procédé selon la revendication 25, dans lequel les seuils des bandes de charge des groupes de chemins de communication sont réglés par le nombre de chemins de communication réservés.

28. Procédé selon la revendication 9, dans lequel lesdites données de disponibilité comprennent une pluralité de binaires, chaque binaire représentant la disponibilité à ou en plus d'une bande particulière de ladite pluralité de bandes.

29. Appareil dans un premier réseau de commutation de télécommunications, pour déterminer un acheminement à travers un réseau de télécommunications comprenant:
un moyen de commande (20), comprenant une mémoire (22) d'une pluralité de tables (24,25,26) et d'un programme (23), sensible à des données mémorisées dans ladite pluralité de tables, et fonctionnant sous la commande dudit programme pour:
à la suite d'un appel entrant (101) vers ledit premier système et de données mémorisées dans une table de traduction (26) dudit moyen de commande, déterminer (103) que ledit appel devrait être acheminé à un deuxième système de commutation;
assembler (257, 258, 275, 259) des premières données de disponibilité de premiers chemins de communication entre ledit premier système et des systèmes desdits troisièmes systèmes connectés audit premier système par lesdits premiers chemins de communication;
dans lequel ledit deuxième système de commutation a un moyen de commande pour assembler des deuxièmes données de disponibilité de chemins de communication entre ledit deuxième système et des systèmes desdits troisièmes systèmes connectés audit deuxième système par des deuxièmes chemins de communication;
CARACTERISE EN CE QUE le moyen de commande fonctionne en outre sous la commande dudit programme pour
convertir lesdites premières données de disponibilité en premières données d'état de charge;
recevoir (163) les deuxièmes données d'état de charge dudit deuxième système de commutation; et
déterminer (165 à 185) un acheminement dans lesdits premier et deuxième systèmes par l'intermédiaire de l'un desdits troisièmes systèmes d'après lesdites premières et deuxièmes données d'état de charge;
dans lequel ledit moyen de commande dudit deuxième système de commutation a un moyen pour convertir lesdites deuxièmes données de disponibilité en deuxièmes données d'état de charge;
dans lequel lesdites premières et deuxièmes données d'état de charge spécifient le niveau d'une pluralité de niveaux, allant du niveau légèrement chargé à fortement chargé à bloqué, qui définit la disponibilité des chemins de communication entre un troisième système et ledit premier et ledit deuxième système, respectivement, et dans lequel ladite détermination comprend la détermination d'un acheminement par l'intermédiaire d'un troisième système ayant des groupes de chemins de communication vers ledit premier et ledit deuxième système, le groupe le plus fortement chargé desdits groupes vers ledit premier et ledit deuxième système ayant le niveau le moins fortement chargé de disponibilité de chemin de communication.

30. Appareil selon la revendication 29, dans lequel ladite pluralité de niveaux comprend un niveau réservé comprenant des groupes de chemins de communication avec des chemins disponibles pour les appels, utilisant deux liaisons, seulement si aucun autre acheminement n'a de circuits disponibles et si un taux de blocage élevé entre le premier système et le deuxième système a été rencontré.

31. Appareil selon la revendication 29, dans lequel ladite pluralité de niveaux comprend un niveau réservé comprenant les groupes de chemins de communication avec des chemins disponibles pour les appels utilisant deux liaisons seulement si aucun autre acheminement n'a de chemins disponibles dans des groupes n'ayant pas l'état de charge de niveau réservé et s'il n'existe pas d'acheminement direct entre le premier système et le deuxième système.

32. Appareil selon la revendication 29, dans lequel une pluralité de types de services est fournie sur un groupe de chemins de communication, dans lequel ladite pluralité de niveaux comprend un niveau réservé, et dans lequel le niveau réservé de service peut être affecté à un sous-ensemble de ladite pluralité de types de services.

33. Appareil selon la revendication 32, dans lequel ledit sous-ensemble comprend des services connaissant un taux élevé de blocage entre ledit premier et ledit deuxième système.

34. Appareil selon la revendication 32, dans lequel ledit sous-ensemble comprend des services ayant moins qu'un nombre désiré minimum d'appels efficaces.

35. Appareil selon la revendication 29, dans lequel la sélection d'un acheminement par l'intermédiaire d'un troisième système sélectionné ayant seulement des groupes de chemins de communication fortement chargés dans au moins l'un des groupes comprend la sélection d'un acheminement seulement si le blocage entre ledit premier et ledit deuxième système dépasse un seuil prédéterminé.

36. Appareil selon la revendication 29, dans lequel ledit niveau légèrement chargé comprend un sous-niveau pour les groupes très légèrement chargés et un sous-niveau pour les groupes modérément légèrement chargés, dans lequel lesdits groupes très légèrement chargés ont un pourcentage de chemins de communication disponibles supérieur à celui desdits groupes modérément légèrement chargés, et dans lequel la sélection d'un acheminement par l'intermédiaire d'un troisième système ayant des groupes légèrement chargés comprend:
la sélection d'un acheminement par l'intermédiaire d'un troisième système ayant des groupes de chemins de communication très légèrement chargés entre ce troisième système et lesdits premier et deuxième systèmes de préférence à un acheminement par l'intermédiaire d'un troisième système dans lequel au moins l'un des groupes entre ce système et lesdits premier et deuxième systèmes est modérément légèrement chargé.

37. Appareil selon la revendication 29, dans lequel les acheminements entre les systèmes de commutation comprennent des acheminements pour transmettre des services différents aux exigences de transmission différentes, lesdits acheminements ayant un chemin de communication capable de transmission selon une pluralité d'exigences de transmission différentes, dans lequel les données des états de charge sont tenues à jour pour chaque type de transmission, et dans lequel ladite détermination comprend la détermination de données de disponibilité de chemins de communication capables d'offrir un service de transmission demandé.

38. Procédé selon la revendication 29, dans lequel ledit moyen de commande comprend en outre une mémoire d'une liste de troisièmes systèmes par lesquels les appels entre lesdits premier et deuxième systèmes peuvent être acheminés, dans lequel ladite étape de détermination comprend:
la détermination d'un acheminement entre lesdits premier et deuxième systèmes par l'intermédiaire de l'un desdits troisièmes systèmes compris dans ladite liste de troisièmes systèmes.

39. Appareil selon la revendication 29, dans lequel le moyen de commande fonctionne en outre sous la commande dudit programme pour transmettre lesdites premières données d'état de charge à des systèmes desdits deuxième et troisième systèmes pour permettre à chacun de ceux-ci de déterminer un acheminement entre ledit chaque système et ledit premier système.

40. Appareil selon la revendication 39, dans lequel ledit moyen de commande fonctionne en outre sous une commande de programme pour préparer périodiquement un message de données comprenant lesdites premières données d'état de charge pour le transmettre à des systèmes desdits deuxième et troisième systèmes.

41. Appareil selon la revendication 39, dans lequel ledit moyen de commande fonctionne en outre sous une commande de programme pour préparer un message de données pour le transmettre audit deuxième système pour demander lesdites deuxièmes données d'état de charge.

42. Appareil selon la revendication 41, dans lequel ladite détermination est effectuée à la suite des données d'état de charge reçues en réponse à une demande précédente provenant dudit premier système.

43. Appareil selon la revendication 29, dans lequel ledit moyen de commande fonctionne en outre sous une commande de programme pour tester s'il existe un chemin de communication direct entre le premier et le deuxième système; et
si ledit essai indique qu'il n'existe pas de chemin de communication direct, pour exécuter l'opération de détermination d'un acheminement par l'intermédiaire de l'un desdits troisièmes systèmes; et
si l'étape d'essai indique qu'il existe un chemin de communication direct, pour déterminer que l'appel doit être acheminé par le chemin de communication direct.
